# EUROPÄISCHE PATENTSCHRIFT

(11) **EP 1 581 755 B1**
(45) Veröffentlichungstag und Bekanntmachung des Hinweises auf die Patenterteilung: **18.12.2013**
(21) Anmeldenummer: 03814455.6
(22) Anmeldetag: 23.12.2003
(51) Int. Cl.: F16H 61/664, F16H 15/42

(54) **KEGELREIBRINGGETRIEBE SOWIE VERFAHREN ZUM BETRIEB EINES DERARTIGEN REIBGETRIEBES**
TRANSMISSION WITH CONE AND FRICTION RING, AND METHOD FOR OPERATING SUCH A FRICTION GEARING
TRANSMISSION A CONE ET BAGUE DE FRICTION, ET PROCEDE D'EXPLOITATION D'UNE TRANSMISSION DE FRICTION DE CE TYPE

(30) Priorität: 06.01.2003 DE 10300373; 17.06.2003 DE 10327516; 16.10.2003 DE 10348718
(43) Veröffentlichungstag der Anmeldung: 05.10.2005
(73) Patentinhaber: Rohs, Ulrich,, 52351 Düren (DE)
(72) Erfinder: ROHS, Ulrich, 52351 Düren (DE); DRÄGER, Christoph, 52379 Langerwehe / Jüngersdorf (DE); BRANDWITTE, Werner, 52379 Langerwehe (DE)
(74) Vertreter: Reuther, Martin
(86) Internationale Anmeldenummer: PCT/DE2003/004255
(87) Internationale Veröffentlichungsnummer: WO 2004/061336

(56) Entgegenhaltungen:
- EP-A- 0 466 113
- GB-A- 1 600 974
- US-A- 3 087 348
- US-A- 5 094 652
- US-A- 5 184 981
- US-A- 6 030 310
- PATENT ABSTRACTS OF JAPAN Bd. 1998, Nr. 11, 30. September 1998 (1998-09-30) & JP 10 169738 A (KOYO SEIKO CO LTD), 26. Juni 1998 (1998-06-26)
- PATENT ABSTRACTS OF JAPAN Bd. 012, Nr. 137 (M-690), 26. April 1988 (1988-04-26) & JP 62 258254 A (NISSAN MOTOR CO LTD), 10. November 1987 (1987-11-10)
- PATENT ABSTRACTS OF JAPAN Bd. 2000, Nr. 22, 9. März 2001 (2001-03-09) & JP 2001 124163 A (NISSAN MOTOR CO LTD), 8. Mai 2001 (2001-05-08)
- PATENT ABSTRACTS OF JAPAN Bd. 0185, Nr. 12 (M-1679), 27. September 1994 (1994-09-27) & JP 6 174030 A (JATCO CORP), 21. Juni 1994 (1994-06-21)
- PATENT ABSTRACTS OF JAPAN Bd. 0185, Nr. 12 (M-1679), 27. September 1994 (1994-09-27) & JP 6 174028 A (MAZDA MOTOR CORP), 21. Juni 1994 (1994-06-21)

## Beschreibung

Die Erfindung betrifft eine Anpresseinrichtung zum Verspannen zweier aufeinander wälzender, ein Drehmoment übertragender Getriebeglieder umfassendes Getriebe.

Derartige Getriebe sind beispielsweise aus der gattungsgemäßen EP 0 878 641 Al bzw. aus der EP 0 980 993 A2 bekannt. Beide Druckschriften offenbaren in ihrem zweiten Ausführungsbeispiel eine Anpresseinrichtung, die in Abhängigkeit von dem Drehmoment, welches ein Abtriebskegel der dort offenbarten Kegelreibringgetriebe überträgt, eine Anpresskraft aufbringt, mit welcher die beiden Kegel sowie der zwischen den beiden Kegeln durch- und den Antriebskegel umgreifend umlaufende Reibring verspannt werden. Auf diese Weise kann sichergestellt werden, dass bei hohen Drehmomenten, bei denen ansonsten die Gefahr eines Durchschlupfens besteht, ein ausreichend hoher Anpressdruck erzeugt wird. Darüber hinaus offenbart die EP 0 980 993 A2 in ihrem ersten Ausführungsbeispiel eine Anpresseinrichtung, deren Anpresskraft über einen Hydraulikzylinder von außen geregelt bzw. eingestellt werden kann.

Diese Anordnungen haben jedoch den Nachteil, dass verhältnismäßig viel Anpresskraft in Reserve bereitgestellt werden muss, da rein mechanische Anpresseinrichtungen nur schwer auf geänderte Gesamtbetriebsparameter eingehen können bzw. da von außen geregelte Anpresseinrichtungen verhältnismäßig lange Reaktionszeiten haben. Insofern muss bei mechanischen Anpresseinrichtungen, die zudem nur sehr bedingt an eine gewünschte Kennlinie angepasst werden können, eine Reserve bereitgestellt werden, die geänderte Außenparametem, die nicht unmittelbar durch die Mechanik erfasst werden können, Rechnung trägt, während bei von außen geregelten Anpresseinrichtungen wegen der verhältnismäßig langen Regelzeiten eine Reserve vorgehalten werden muss, um Drehmomentspitzen begegnen zu können.

Es ist Aufgabe vorliegender Erfindung, ein Getriebe bereitzustellen, welches diesbezüglich Vorteile bringt.

Als Lösung schlägt die Erfindung eine Anpresseinrichtung zum Verspannen zweier aufeinander wälzender, ein Drehmoment übertragender Getriebeglieder mit Mitteln zum Erfassen einer relevanten Kenngröße, insbesondere des übertragenen Drehmoments, und mit Mitteln zum Aufbringen einer der erfassten Kenngröße entsprechenden Anpresskraft vor, welche sich dadurch auszeichnet, dass die Anpresseinrichtung zumindest zwei Teilanpresseinrichtungen umfasst, von denen die erste der beiden Teilanpresseinrichtungen eine kürzere Reaktionszeit als die zweite der beiden Teilanpresseinrichtungen aufweist. Ebenso wird als Lösung ein Getriebe mit zwei Drehmoment übertragenden Getriebegliedern, die durch eine entsprechende Anpresseinrichtung verspannt sind, vorgeschlagen.

Es versteht sich, dass eine derartige, zwei Teilanpresseinrichtungen umfassende Anpresseinrichtung für verschiedenste Getriebe, bei denen Getriebeglieder in Abhängigkeit von bestimmten Kenngrößen aneinander gepresst werden müssen, vorteilhaft zur Anwendung kommen kann. Hierzu zählen insbesondere alle Arten umlaufender Getriebe, die reibend miteinander wechselwirkende Getriebeglieder besitzen.

Vorzugsweise wird die Reaktionszeit der ersten Teilanpresseinrichtung so kurz gewählt, dass auf Stöße oder ähnliches schnell reagiert werden kann. Vorzugsweise wird eine Anordnung gewählt, die rein mechanisch ausgebildet ist und somit nahezu keine Reaktionszeit aufweist. Auf diese Weise kann sich die Anpresseinrichtung kurzzeitigen Schwankungen schnell anpassen, wodurch insbesondere ein Schlupf zwischen den aufeinander wälzenden Getriebegliedern vermieden werden kann.

Es kann insbesondere ausreichen, die erste Teilanpresseinrichtung ungeregelt und lediglich in Abhängigkeit der kritischen Kenngrößen unmittelbar anzusteuern. Auf diese Weise kann sich die erste Teilanpresseinrichtung -und somit auch die gesamte Anpresseinrichtung - äußerst schnell und zuverlässig auf Stöße bzw. nahezu unstetige oder unstetige Änderungen der kritischen Kenngröße einstellen. Hierzu braucht insbesondere die erste Teilanpresseinrichtung nicht hinsichtlich ihrer von der Kenngröße abhängigen Kennlinie optimiert sein. Vielmehr ist es von Bedeutung, dass die erste Teilanpresseinrichtung auf Stöße bzw. Unstetigkeiten geeignet - insbesondere mit ausreichend kurzer Reaktionszeit - reagieren kann.

Eine optimale Kennlinie der gesamten Anpresseinrichtung wird vorzugsweise durch die zweite Teilanpresseinrichtung umgesetzt, die somit vorzugsweise hinsichtlich ihrer Kennlinie bzw. hinsichtlich der Kennlinie der gesamten Anpresseinrichtung optimiert sein kann, ohne auf Stöße oder plötzliche Unstetigkeiten kurzfristig reagieren zu können bzw. zu müssen. Insbesondere ist es von Vorteil, wenn die zweite Teilanpresseinrichtung geregelt ist, so dass die Kennlinie bestmöglich gewählt werden kann. Insbesondere kann die zweite Teilanpresseinrichtung durch unterschiedliche bzw. verschiedenste Kenngrößen angesteuert werden und somit detailliert auf die jeweiligen Anforderungen reagieren. Darüber hinaus kann die Teilanpresseinrichtung, insbesondere in ihrem Regelkreis, hinsichtlich einer Schwingungsdämpfung optimiert sein, was in der Regel ebenfalls zu einer Reduktion der Reaktionszeiten führt. Letzteres ist jedoch, wie bereits vorstehend erläutert, nicht so kritisch, da die erste Teilanpressung mit entsprechend kürzeren Reaktionszeiten reagieren kann.

Eine erfindungsgemäße Anordnung kann es bei geeigneter Ausgestaltung insbesondere ermöglichen, die Verluste in einem entsprechenden Getriebe zu minimieren. Insbesondere besteht die Möglichkeit, die erste Teilanpresseinrichtung unter Sicherheitsaspekten bzw. in Bezug auf die Betriebssicherheit optimiert auszulegen, während die zweite Teilanpresseinrichtung in ihrer Kennlinie derart gewählt ist, dass eine sicherheitsbedingte, von der ersten Teilanpresseinrichtung herrührende Kennlinienverschiebung in geeigneter Weise kompensiert wird.

Dementsprechend löst unabhängig von den übrigen Merkmalen vorliegender Erfindung eine Anpresseinrichtung zum Verspannen zweier aufeinander wälzender, ein Drehmoment übertragender Getriebeglieder mit Mitteln zum Erfassen einer relevanten Kenngröße, insbesondere des zu übertragenen Drehmoments, und mit Mitteln zum Aufbringen einer der erfassten Kenngröße entsprechenden Anpresskraft die vorstehend genannte Aufgabe, bei welcher die Anpresseinrichtung zumindest zwei Teilanpresseinrichtungen umfasst sowie bei welcher die erste Teilanpresseinrichtung eine Anpresskraft bereitstellt, die größer oder gleich der von der gesamten Anpresseinrichtung bereitzustellenden Anpresskraft ist, und die zweite Teilanpresseinrichtung, die von der Anpresseinrichtung bereitgestellte Anpresskraft reduziert. Dementsprechend ist auch ein Getriebe mit zwei drehmomentübertragenden Getriebegliedern, die durch eine derartige Anpresseinrichtung verspannt sind, vorteilhaft.

Bei einer derartigen Ausgestaltung kann die erste Teilanpresseinrichtung die notwendige Anpresskraft in einem Übermaß bereitstellen, so dass insbesondere kurzzeitige Schwankungen betriebssicher aufgefangen werden können. Durch die zweite Teilanpresseinrichtung kann die übermäßige Anpresskraft wieder reduziert werden, wodurch sich Verluste minimieren lassen, ohne dass die Gefahr besteht, dass bei kurzzeitigen Stößen oder ähnlichem eine unzureichende Anpresskraft zur Verfügung steht.

Dementsprechend ist es kumulativ bzw. alternativ von Vorteil, wenn die zweite Anpresseinrichtung eine der von der ersten Teilanpresseinrichtung aufgebrachten Kraft entgegengesetzte Kraft aufbringt. Auf diese Weise kann insbesondere eine Kraftreduktion betriebssicher vorgenommen werden. Darüber hinaus kann bei einer derartigen Anordnung die erste Teilanpresseinrichtung ihre Kennlinie unmittelbar und direkt ausspielen und, falls notwendig, der durch die zweite Teilanpresseinrichtung bedingten Kraftreduktion entgegen wirken.

Vorzugsweise kompensiert dementsprechend die zweite Teilanpresseinrichtung die von der ersten Teilanpresseinrichtung aufgebrachte Kraft teilweise, was bei geeigneter Ausgestaltung auch unabhängig von den vorgenannten Merkmalen zu den vorbeschriebenen Vorteilen führt.

Auch wenn lediglich einzeln bei einer Anpresseinrichtung bzw. einem entsprechenden Getriebe eingesetzt, können die vorgenannten Merkmale eine erhebliche Verlustreduktion bewirken, wenn die Anpresseinrichtung in geeigneter Weise optimiert ist. Insbesondere ist es möglich, die durch die Anpresskräfte bedingten Lagerkräfte, mit denen die jeweiligen Getriebeglieder an einem Gestell bzw. Gehäuse gelagert sind, auf ein Minimum zu reduzieren, wodurch Verluste in erheblichem Maße vermieden werden können. Hierbei können bei den vorbeschriebenen Anordnungen insbesondere die Sicherheitsmargen, die notwendigerweise zur Absicherung gegen unvorhersehbare bzw. schnelle Änderungen der Betriebsparameter vorgesehen sein müssen, auf ein Minimum reduziert werden, da die erste Teilanpresseinrichtung schnell bzw. mit ausreichenden Kraftreserven reagieren kann. Während normaler Betriebszustände wird dagegen durch die zweite Teilanpresseinrichtung vorzugsweise die Anpresskraft bzw. die resultierende Verspannkraft mit dem Gestell bzw. Gehäuse reduziert. Dieses bedingt eine Reduktion der Gesamtverluste, da Stöße bzw. schnelle Änderungen nur kurzzeitig auftreten und somit über die Gesamtbetriebszeit eine nur untergeordnete Rolle spielen.

Es versteht sich, dass eine erfindungsgemäße Anpresseinrichtung bei verschiedensten Getrieben mit aufeinander wälzenden Getriebegliedern zur Anwendung kommen kann. Sie eignet sich insbesondere für Anordnungen, bei denen die jeweiligen Getriebeglieder im Reibschluss oder reibend bzw. unter Gefahr eines Schlupfes bei unzureichender Anpresskraft miteinander wechselwirken. Insbesondere kann durch eine derartige Anpresseinrichtung bei derartigen Anordnungen ein Verlust minimiert werden.

Bei einem hydraulischen System kann ein entsprechender Anpressdruck beispielsweise durch einen elektromagnetisch angesteuerten Kolben aufgebracht werden. Eine derartige Anordnung baut klein und kompakt und weist einen mechanisch einfachen Aufbau auf.

Der Kolben kann auf seinem Hubweg zunächst eine Überlauf-/Nachfüllöffnung verschließen. Durch eine derartige Anordnung bzw. Verfahrensführung kann jederzeit gewährleistet werden, dass ausreichend Hydraulikflüssigkeit zwischen Kolben und Anpresseinrichtung vorhanden ist. Ist der Kolben mit einer Kraft beaufschlagt, so sorgt er dafür, dass das Fluid solange in Richtung auf die Anpresseinrichtung komprimiert wird, bis diese einen ausreichenden Gegendruck erzeugt. Ist der Kolben nicht beaufschlagt, so kann zuviel Fluid durch die Öffnung entweichen, während andererseits bei zuwenig Fluid über diese Öffnung aus einem Reservoir Fluid nachgeführt werden kann.

Alternativ kann für die hydraulische Ansteuerung eine Zahnradpumpe vorgesehen sein. Eine derartige Zahnradpumpe ist verhältnismäßig kostengünstig und hat darüber hinaus den Vorteil, dass sie äußerst wartungsarm und betriebssicher auch variable Anpressdrucke, beispielsweise durch variable Rotationsgeschwindigkeiten bzw. variable Drehmomente, aufbringen kann. Insbesondere kann die Zahnradpumpe elektromotorisch angetrieben werden, wobei vorzugsweise ein stromabhängiges Drehmoment bereitgestellt wird. Dieses kann insbesondere durch eine Strombegrenzung bzw. Stromregelung erfolgen, die in der Regel in einem Kraftfahrzeug einfacher umzusetzen ist, als eine Spannungsregelung. Andererseits kann eine Spannungsregelung insbesondere bei einer digitalen Ansteuerung vorteilhaft, da einfacher zu realisieren, sein. Auf diese Weise kann einfach und zuverlässig eine variable Anpresskraft bereitgestellt werden, wobei die Zahnradpumpe sogar bewusst hinsichtlich ihrer Flügel nicht zur Gänze abgedichtet sein braucht und durchaus einen Schlupf aufweisen kann. Insbesondere bei einer ein Drehmoment regelnden Ansteuerung kann die notwendige Anpresskraft beispielsweise durch eine höhere Drehzahl gewährleistet werden.

Statt einer Zahnradpumpe kann auch eine andere Pumpe, insbesondere eine andere Pumpe, die lediglich ähnlich einer Zahnradpumpe einen Druckgradienten bereitstellt bzw. die eine innere Leckage aufweist, zur Anwendung kommen.

Es versteht sich, dass diese Einrichtungen zur Erzeugung einer variablen Anpresskraft auch unabhängig von den übrigen Merkmalen der Anpresseinrichtungen bzw. Getrieben vorteilhaft für stufenlos einstellbare Getriebe, wie insbesondere für Kegelreibringgetriebe, vorteilhaft sind, um über den Verstellweg bzw. die Bandbreite des Übersetzungsverhältnisses jeweils den optimalen Anpressdruck für das stufenlos einstellbare Getriebe zu gewährleisten.

Kumulativ bzw. alternativ wird ein Verfahren zum Betrieb eines Reibgetriebes mit wenigstens einem Eingangsglied und wenigstens einem Ausgangsglied, die mittels einer Anpresseinrichtung gegeneinander gepresst werden, vorgeschlagen, welches sich dadurch auszeichnet, dass die Anpresseinrichtung mit einer Betriebszustand-Anpresskraft-Kennlinie betrieben wird, die zwischen einem Ruhezustand des Reibgetriebes und einem ersten Betriebszustand eine andere mittlere Steigung als zwischen dem ersten Betriebszustand und einem zweiten Betriebszustand hat. Ebenso wird kumulativ bzw. alternativ ein Reibgetriebe mit wenigstens zwei Betriebszuständen vorgeschlagen, bei welchem wenigstens ein Eingangsglied und wenigstens ein Ausgangsglied mittels wenigstens einer Anpresseinrichtung mit einer in Abhängigkeit von dem jeweiligen Betriebszustand variierenden Anpresskraft gegeneinander gepresst werden und welches sich durch eine Anpresseinrichtung mit der bereits vorstehend beschriebenen Betriebszustand-Anpresskraft-Kennlinie auszeichnet. Durch ein derartiges Verfahren bzw. durch eine derartige Anordnung kann, auch unabhängig von den übrigen Merkmalen vorliegender Erfindung die Wirtschaftlichkeit beim Betrieb eines Reibringgetriebes erhöht werden.

Insbesondere ist eine derartige, variierende Kennlinie für die Anpresseinrichtung bei allen Reibgetrieben, bei welchen wenigstens ein Eingangsglied und wenigstens ein Ausgangsglied reibend miteinander wechselwirken vorteilhaft. In diesem Zusammenhang umfasst der Begriff "reibend" jede nicht formschlüssige Wechselwirkung zwischen zwei umlaufenden Getriebegliedern, wobei vorzugsweise bei zu hohen Drehmomenten ein zerstörungsfreier Schlupf zwischen den beiden Getriebegliedern auftreten kann. Insbesondere umfasst dieser Begriff auch eine Wechselwirkung, die durch hydrostatische bzw. hydrodynamische bzw. elektrostatische, elektrodynamische oder magnetische Kräfte zwischen den beiden Getriebegliedern wirkt. Vorliegende Erfindung umfasst somit insbesondere auch Reibgetriebe, bei welchen zwischen den eigentlichen mechanischen Getriebegliedern ein mit einem Fluid, wie beispielsweise einem Gas oder einer Flüssigkeit, gefüllter Spalt verbleibt und die Geschwindigkeiten, die Spaltbreiten, die Drücke und ähnliches derart dimensioniert sind, dass dieses Fluid beispielsweise durch Scherkräfte eine Wechselwirkung zwischen den beiden Getriebegliedern bedingt. Insofern eignet sich auch diese variierende Kennlinie für Reibgetriebe, bei welchen zwischen den beiden Getriebegliedem ein die Wechselwirkung vermittelndes Medium bzw. mehrere derartiger Medien, wie Fluide oder aber ein weiteres Getriebeglied, vorgesehen sind.

Bei all diesen Anordnungen wird die Wechselwirkung zwischen den beiden Getriebegliedern zu einem verhältnismäßig großen Teil von den Kräften beherrscht, die auf die jeweilige wechselwirkende Fläche der Getriebeglieder wirken. Wie beispielsweise aus der EP 0 878 641 A1 bzw. aus der EP 0 980 993 A2 bekannt, können hierzu die beiden Getriebeglieder in geeigneter Weise verspannt sein, was beispielsweise durch geeignete Lager gewährleistet werden kann. Des Weiteren können, wie einzelne Ausführungsbeispiele in diesen Druckschriften darstellen, Anpresseinrichtungen vorgesehen sein, die über eine bestimmte Grundlast hinausgehend variable Anpresskräfte in Abhängigkeit vom Ausgangsdrehmoment bereitstellen, so dass bei hohen Ausgangsdrehmomenten auch hohe Anpresskräfte erzeugt werden können, wodurch das übertragbare Drehmoment des Reibgetriebes entsprechend erhöht werden kann. Derartige Anordnungen führen nach dem Stand der Technik jedoch zu verhältnismäßig hohen Verlusten bei derartigen Reibgetrieben, wodurch deren Wirtschaftlichkeit in Frage gestellt wird.

Wie bereits erläutert, brauchen Eingangsglied und Ausgangsglied nicht unmittelbar verbunden sein, vielmehr ist es auch denkbar, das mittelnde Getriebeglieder bzw. die Reibverbindung mittelnde Maßnahmen, wie zusätzliche Fluide oder weitere Wechselwirkungsmechanismen, vorhanden sein können. Wegen der in einem Getriebe herrschenden Kräftegleichgewichte können Eingangsglied und Ausgangsglied auch vertauscht werden. Da jedoch häufig derartige Getriebe in einem komplexen Antriebsstrang zu finden sind, wird diese Differenzierung in der Regel beibehalten werden müssen. Es versteht sich im Übrigen, dass ein Gegeneinanderpressen der beiden Getriebeglieder auch durch versetzt gerichtete Freiheitsgrade dieser Getriebeglieder erfolgen kann, solange wenigstens eine Komponente der beim Ver- bzw. Anpressen genutzten Freiheitsgrade in geeigneter Weise auf die wechselwirkende Oberfläche eines entsprechenden Getriebegliedes gerichtet ist.

Erfindungsgemäße Reibringgetriebe können in verschiedenen Betriebszuständen sowie unter Berücksichtigung unterschiedlicher Betriebszustandsarten betrieben werden. Derartige Betriebszustandsarten können beispielsweise Eingangs- bzw. Ausgangsdrehmomente, Drehzahlen, Kräfte bzw. Kraftverhältnisse, Drücke oder auch Temperaturen, Zeiten oder ähnliches sowie hierzu proportionale Messgrößen sein. Während des Betriebs eines derartigen Reibgetriebes werden die jeweiligen Betriebszustandsarten in verschiedensten Betriebszuständen genutzt, wobei - je nach konkreter Ausführungsform bzw. Umsetzung - einige Betriebszustandsarten von nur untergeordneter Bedeutung sind oder aber zu anderen, leicht messbaren Betriebszustandsarten proportional sind.

Eine variierende Kennlinie lässt sich beispielsweise kumulativ bzw. alternativ mit einem Reibgetriebe realisieren, bei welchem die Anpresseinrichtung wenigstens zwei Anpresseinheiten umfasst. Durch eine derartige, mindestens zwei Komponenten umfassende Anpresseinrichtung kann die Betriebszustand-Anpresskraft-Kennlinie mit verhältnismäßig einfachen Mitteln an gewünschte Erfordernisse angepasst werden. Dieses gilt insbesondere für die verschiedenen mittleren Steigungen der Betriebszustand-Anpresskraft-Kennlinie, wie sie vorstehend beschrieben wurden. Diesbezüglich beschreibt der Begriff "mittlere Steigung" zwischen zwei Betriebszuständen bzw. zwischen einem Betriebszustand und einem Ruhezustand einen Wert, der durch eine gemittelte Steigung bzw. durch eine gemittelte Gerade der ersten Ableitung in dem entsprechenden Intervall der Betriebszustand-Anpresskraft-Kennlinie ermittelt ist. Durch die Steigungsänderung besteht die Möglichkeit, die Betriebszustand-Anpresskraft-Kennlinie zumindest in zweierlei Hinsicht bezüglich der Notwendigkeiten im Antrieb zu optimieren. So kann zwischen den beiden Betriebszuständen für möglichst optimale Verhältnisse bezüglich der Antriebskraft in Abhängigkeit des jeweiligen konkreten Betriebszustands gesorgt werden, so dass die Anpresskraft in Bezug auf den momentanen Betriebszustand möglichst optimal gewählt ist. Hierdurch können bei optimaler Leistung des Reibgetriebes Verluste minimiert werden. Die Anpassung der Kennlinie zwischen ersten Betriebszustand und Ruhezustand ermöglicht hingegen einen direkten Übergang zwischen diesen beiden Zuständen, wodurch Grundlasten und somit Grundverluste darüber hinausgehend minimiert werden können. Es versteht sich hierbei, dass diese Maßnahme nicht zwingend allein zu einem optimalen Ergebnis führen muss, wobei dieses - je nach vorliegenden Randbedingungen - bereits der Fall sein kann. Der Fachmann erhält jedoch hierdurch eine Möglichkeit, die Leistungsfähigkeit derartiger Reibgetriebe zu verbessern. Er wird hierbei gegebenenfalls einen Kompromiss zwischen weiteren, leistungssteigernden Maßnahmen und - gegebenenfalls - höheren Kosten eingehen.

Insbesondere ist es vorteilhaft, wenn die beiden Anpresseinheiten als Bestandteil der Anpresseinrichtung unterschiedliche Betriebszustand-Anpresskraft-Kennlinien aufweisen. Durch Kombination der beiden Kennlinien kann die Gesamtkennlinie der Anpresseinrichtung übersichtlich und in nachvollziehbarer Weise entsprechend angepasst werden.

Vorzugsweise können die beiden Anpresseinheiten im ersten Betriebszustand jeweils einen ersten Beitrag zur Anpresskraft erbringen und im zweiten Betriebszustand jeweils einen zweiten Beitrag zur Anpresskraft erbringen, wobei die Differenz zwischen ersten und zweiten Beitrag der ersten Anpresseinrichtung von der Differenz zwischen ersten und zweiten Beitrag der zweiten Anpresseinrichtung abweicht. Auf diese Weise wird ein System bereitgestellt, bei welchem die jeweiligen Anpresseinheiten in den jeweiligen Betriebszuständen einen unterschiedlichen Beitrag zur gesamten Anpresskraft der Anpresseinrichtung leisten, wodurch die Kennlinie der gesamten Anpresseinrichtung auf konstruktiv einfache Weise beeinflusst werden kann.

Die beiden Anpresseinheiten können hierbei, unabhängig von den übrigen Merkmalen vorliegender Erfindung, bezüglich der Betriebszustandsermittlung und/oder Anpresskraft parallel oder in Reihe wirkend ausgebildet sein. Hierdurch sowie durch geeignete Übersetzungsverhältnisse bei einer entsprechenden Kopplung kann die Gesamtkennlinie der Anpresseinrichtung ohne Weiteres an die bestehenden Erfordernisse angepasst werden. Zwar ist es durch geeignete Kurvenbahnen oder ähnliche Maßnahmen möglich, eine Betriebszustand-Anpresskraft-Kennlinie für eine derartige Anpresseinrichtung in verhältnismäßig weiten Grenzen anzupassen. Dieses hat jedoch in der Regel den Nachteil, dass externe Einflüsse, wie Toleranzen, Spiel, thermische Expansion oder ähnliches, eine Verlagerung auf der Kennlinie bewirken, so dass diese Kennlinie nicht mehr korrekt in Abhängigkeit von dem entsprechenden Betriebszustand durchlaufen wird. Insbesondere in diesen Fällen ist daher nicht mehr gewährleistet, dass eine Betriebszustandsänderung auch die gewünschte Änderung der Anpresskraft bedingt. Aus diesem Grunde wird vorliegend - auch unabhängig von den übrigen Merkmalen vorliegender Erfindung - vorgeschlagen, dass wenigstens eine Anpresseinheit, vorzugsweise beide oder alle Anpresseinheiten, eine Betriebszustand- Anpresskraft-Kennlinie mit einer im Wesentlichen konstanten Steigung aufweisen. Eine derartige Anordnung ist verhältnismäßig unempfindlich gegen Toleranzprobleme bzw. die vorgenannten Störungen, da bei jeder Anpresseinheit, die entsprechend ausgelegt ist, eine externe Störung insofern keine Relevanz aufweist, als dass eine Änderung des Betriebszustandes wegen der konstanten Steigung der jeweiligen Kennlinie unabhängig von derartigen Störungen die gleiche Änderung der entsprechend Anpresskraft bedingt. Insofern ist eine derartige Lösung insbesondere dann von Vorteil, wenn Reibgetriebe mit Anpresseinrichtungen, deren Gesamtkennlinie von einer Geraden abweicht, Verwendung finden. In diesem Zusammenhang versteht es sich, dass der Begriff "im Wesentlichen konstante Steigung" auf die ansonsten im System ohnehin vorhandenen Toleranzen sowie auf die übrigen Genauigkeitsanforderungen in dem Gesamtantriebsstrang zu sehen ist, so dass diesbezüglich der Begriff der "Konstanz" einer Steigung nicht enger als dieses die Gesamtgenauigkeit bzw. Gesamttoleranz des Systems erfordert, anzusetzen ist.

Vorzugsweise sind die Anpresseinheiten miteinander gekoppelt, wobei die Kopplung mechanisch bzw. hydrodynamisch oder hydrostatisch ausgebildet sein kann. Dieses gilt insbesondere auch für den Fall, dass die Anpresseinheiten getrennt jeweils an einem Getriebeglied vorgesehen sind. Insbesondere bei einer eingangsseitig vorgesehenen Anpresseinrichtung bzw. Anpresseinheit besteht die Möglichkeit, eine Eingangslast zu berücksichtigen, wobei dieses insbesondere dadurch geschehen kann, dass bei Teillasten die Anpresskraft reduziert wird, wodurch die Gesamtverluste des Reibringgetriebes reduziert werden können, so dass eine derartige, antriebsseitig vorgesehene Anpresseinrichtung bzw. Anpresseinheit auch unabhängig von den übrigen Merkmalen vorliegender Erfindung vorteilhaft ist.

Durch die Kopplung der eingangsseitigen Anpresseinheit mit einer ausgangsseitigen Anpresseinheit wird es darüber hinaus möglich, bei optimalen Volllastverhalten die Anpresskraft unter Teillast zu reduzieren, so dass die Gesamtverluste minimiert werden können.

Als Betriebszustandsart können verschiedene Parameter des jeweiligen Reibgetriebes genutzt werden. Dieses können insbesondere ein Eingangsdrehmoment, ein Ausgangsdrehmoment, die Gesamtlast, auftretende Kräfte oder andere bereits vorstehend erwähnte Parameter sein.

Besonders vorteilhaft ist die Überprüfung des Ausgangs- und/oder des Eingangsdrehmomentes sowie - gegebenenfalls - der Gesamtlast, da hieraus unmittelbar Informationen über die an der Reibverbindung der beiden Getriebeglieder auftretenden bzw. benötigten Kräfte gewonnen werden können.

Dementsprechend ist es vorteilhaft, wenn für den Vergleich der mittleren Steigung zwischen Ruhezustand und ersten Betriebszustand bzw. ersten Betriebszustand und zweiten Betriebszustand der erste Betriebszustand das niedrigste, unter Volllast erwartete Drehmoment und der zweite Betriebszustand das höchste, unter Volllast erwartete Drehmoment ist. Dementsprechend kann für eine geeignete Dimensionierung der Kennlinie die notwendige Anpresskraft für das niedrigste, unter Volllast erwartete Drehmoment und für das höchste, unter Volllast erwartete Drehmoment ermittelt werden, so dass die entsprechende Kennlinie unmittelbar als Gerade zwischen diesen beiden Punkten ausgebildet werden kann.

Der Vorteil einer Geraden als Kennlinie wurde bereits vorstehend detailliert erläutert. Ebenso kann zwischen Ruhezustand bzw. der minimal erforderlichen Anpresskraft, damit das Getriebe anfahrsicher nicht schlupft und/oder nicht klappert, und der notwendigen Anpresskraft beim niedrigsten unter Volllast erwarteten Drehmoment eine Gerade gelegt werden, so dass auch hier die Toleranzunempfindlichkeit bei der Verwendung von Kennlinien mit konstanter Steigung genutzt werden kann. Diese Kennlinienwahl hat den großen Vorteil, dass eine Grundlast auf das zwingend notwendige Minimum beschränkt ist, so dass auch diesbezüglich der Wirkungsgrad eines derartigen Reibgetriebes optimiert ist.

Es kann vorteilhaft sein, dass die beiden Anpresseinheiten hinsichtlich ihrer jeweiligen Anpresskraft, bzw. hinsichtlich ihres Beitrags zur Gesamtanpresskraft der Anpresseinrichtung durch verschiedene Betriebszustandsarten variiert werden. So kann diesbezüglich eine Anpresseinheit beispielsweise hinsichtlich des Eingangsdrehmoments bzw. der Gesamtlast und eine Anpresseinheit hinsichtlich des Ausgangsdrehmoments in ihrer Anpresskraft variiert werden. Auf diese Weise kann das Gesamtverhalten des Reibgetriebes in einer großen Bandbreite an die gegebenen Erfordernisse angepasst werden, so dass es insbesondere hinsichtlich seines Wirkungsgrades optimiert werden kann.

Weitere Vorteile, Eigenschaften und Ziele vorliegender Erfindung werden anhand nachfolgender Beschreibung anliegender Zeichnung erläutert. In der Zeichnung zeigen
- Figur 1: ein erstes erfindungsgemäßes Getriebe mit Anpresseinrichtung in schematischer Schnittdarstellung;
- Figur 2: den Ausgangskegel eines zweiten erfindungsgemäßen Getriebes mit Anpresseinrichtung in ähnlicher Darstellung wie Figur 1;
- Figur 3: den Ausgangskegel eines dritten erfindungsgemäßen Getriebes mit Anpresseinrichtung in ähnlicher Darstellung wie Figur 1;
- Figur 4: eine schematische Darstellung der Kranverhältnisse bei den Ausführungsformen nach Figur 1;
- Figur 5: eine schematische Darstellung der Kraftverhältnisse bei den Ausführungsformen nach Figuren 2 und 3;
- Figur 6: eine schematische Darstellung der Kraftverhältnisse bei einer Alternative;
- Figur 7: eine schematische Darstellung der Kräfteverhältnisse bei einer möglichen Alternative;
- Figur 8: eine schematische Darstellung der Kräfteverhältnisse bei einer weiteren Alternative;
- Figur 9: eine schematische Darstellung der Kräfteverhältnisse bei einem anderen Ausführungsbeispiel;
- Figur 10: eine schematische Schnittdarstellung der in Figur 6 angedeuteten Alternative in ähnlicher Darstellung wie Figur 1;
- Figur 11: eine alternative Umsetzung der in Figur 6 angedeuteten Alternative in ähnlicher Darstellung wie Figur 1;
- Figur 12: eine schematische Schnittdarstellung eines weiteren Getriebes mit einer alternativen Anpresseinrichtung;
- Figur 13: eine hydraulische Ansteuerung für ein erfindungsgemäßes Getriebe;
- Figur 14: ein erfindungsgemäßes Reibgetriebe in schematischer Schnittdarstellung;
- Figur 15: einen schematischen Ausschnitt aus Figur 14;
- Figur 16: eine schematische Darstellung der Wirkungsweise der Anpresseinrichtung aus den Figuren 14 und 15;
- Figur 17: die Kennlinie der inneren Kugeleinheit der Anordnung nach den Figuren 14 und 15;
- Figur 18: die Kennlinie der äußeren Kugeleinheit der Anordnung nach den Figuren 14 und 15;
- Figur 19: die Kennlinie der gesamten Anpresseinheit der Anordnung nach den Figuren 14 und 15;
- Figur 20: eine alternative Kennlinie der inneren Kugeleinheit der Anordnung nach den Figuren 14 und 15;
- Figur 21: eine an die Kennlinie nach Figur 20 angepasste Kennlinie der äußeren Kugeleinheit der Anordnung nach den Figuren 14 und 15;
- Figur 22: die Kennlinie der gesamten Anpresseinheit unter Berücksichtigung der Kennlinien nach den Figuren 20 und 21 der Anordnung nach den Figuren 14 und 15;
- Figur 23: eine mögliche Kennlinie einer Anpresseinrichtung;
- Figur 24: eine weitere mögliche Kennlinie einer Anpresseinrichtung;
- Figur 25: eine besonders vorteilhafte Kennlinienausgestaltung;
- Figur 26: ein zweites erfindungsgemäßes Reibgetriebe in schematischer Schnittdarstellung;
- Figur 27: die Kennlinie der Eingangsanpresseinheit der Anordnung nach der Figur 26;
- Figur 28: die Kennlinie der Ausgangsanpresseinheit der Anordnung nach der Figur 26;
- Figur 29: die Kennlinie der gesamten Anpresseinheit der Anordnung nach der Figur 26;
- Figur 30: ein drittes erfindungsgemäßes Reibgetriebe in schematischer Schnittdarstellung;
- Figur 31: ein viertes erfindungsgemäßes Reibgetriebe in schematischer Schnittdarstellung;
- Figur 32: die Kennlinie der Eingangsanpresseinheit der Anordnungen nach der Figur 30 und 31;
- Figur 33: die Kennlinie der Ausgangsanpresseinheit der Anordnungen nach den Figuren 30 und 31; und
- Figur 34: die Kennlinie der gesamten Anpresseinrichtung der Anordnungen nach den Figuren 30 und 31.

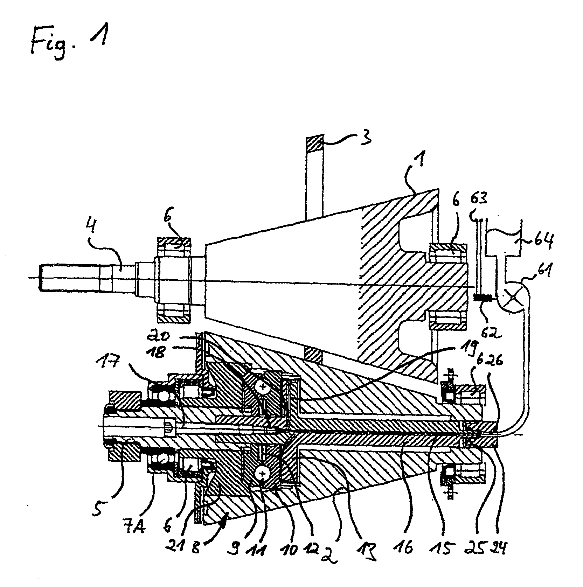

Das Getriebe nach Figur 1 umfasst einen Eingangskegel 1 und einen Ausgangskegel 2, die über einen verstellbaren Reibring 3 in an sich bekannter Weise miteinander wechselwirken. Hierbei ist der Eingangskegel 1 mit einer Antriebswelle 4 und der Ausgangskegel 2 mit einer Abtriebswelle 5 wirkverbunden. Die Kegel 1, 2 sind bei diesem Ausführungsbeispiel in radialer Richtung durch Zylinderrollenlager 6 gelagert. Darüber hinaus sind die Kegel 1, 2 in axialer Richtung in diesem Ausführungsbeispiel durch Vierpunktlager 7A gegeneinander verspannt, so dass die notwendigen Anpresskräfte aufgebracht werden können, damit Drehmoment über den Reibring 3 von dem Eingangskegel 1 auf den Ausgangskegel 2 und umgekehrt übertragen werden kann. Die axiale Abstützung des Eingangskegels 1 ist in vorliegenden Figuren nicht explizit dargestellt, kann jedoch beispielsweise ebenfalls durch ein Vierpunktlager 7A oder aber auch durch ein Axial-Zylinderrollenlager oder ähnliches erfolgen.

Zur Verspannung bzw. zum Erzeugen der notwendigen Anpresskräfte ist darüber hinaus zwischen der Abtriebswelle 5 und dem Ausgangskegel 2 eine Anpresseinrichtung 8 vorgesehen, während bei diesem Ausführungsbeispiel die Eingangswelle 4 unmittelbar mit dem Eingangskegel 1 verbunden ist. Die Anpresseinrichtung 8 ist in der Lage, den axialen Abstand zwischen dem Ausgangskegel 2 und dem Lager 7A an der Abtriebswelle 5 zu variieren bzw. - in verspanntem Zustand - entsprechend variierende Anpresskräfte zu erzeugen.

Es versteht sich, dass statt der Lager 6 und 7A auch andere Lageranordnungen, wie Axial-Schrägkugellager, Axial-Pendelkugellager, Axial-Rillenkugellager, Kegelrollenlager oder ähnliche Lager bzw. Lagerarten miteinander kombiniert werden können, um die Kegel 1, 2 einerseits radial und andererseits ausreichend axial verspannt zu lagern. Ebenso können beispielsweise hydrodynamische oder hydrostatische Lager zur Anwendung kommen.

Im Betrieb kann der Reibring 3 in an dieser Stelle nicht näher erläuterter, aber bekannter Art und Weise verstellt und auf diese Weise das Übersetzungsverhältnis des Getriebes gewählt werden. Es versteht sich, dass im Betrieb die Gesamtanordnung insbesondere unterschiedlichen Drehmomenten unterliegt bzw. unterliegen kann. Da es sich bei der Wirkverbindung zwischen den beiden Kegeln 1, 2 um eine Reibverbindung handelt, sind vorzugsweise die Anpresskräfte ausreichend hoch zu wählen, damit ein beherrschbarer Schlupf an dem Reibring 3 auftritt. Andererseits würden unnötig hohe Anpresskräfte zu einer verhältnismäßig starken Grundlast führen, die wiederum den Wirkungsgrad des Reibgetriebes beeinträchtigen würde. Ein beherrschbarer und insbesondere auch ausreichend hoher Schlupf kann vorteilhaft sein, um die Regelung des Getriebes zu erleichtern, da dann lediglich die Drehzahl als Regelgröße notwendig ist, während die Drehmomente über die Anpresskraft entsprechend angepasst und übertragen werden.

Um die Anpresskraft in geeigneter Weise einstellen zu können, ist bei vorliegendem Ausführungsbeispiel eine drehmomentabhängige Anpresskraftregelung gewählt, wobei jedoch die Anpresskraft, wie nachfolgend erläutert wird, auch von anderen Betriebszuständen abhängig gewählt werden kann. Wie unmittelbar aus Figur 1 ersichtlich, wird für die Anpresskraftregelung insbesondere das Ausgangsdrehmoment als Stellgröße gewählt.

Bei vorliegendem Ausführungsbeispiel umfasst die Anpresseinrichtung 8 zwei Anstellscheiben 9, 10, die Führungsbahnen für Kugeln 11 aufweisen und sich einerseits über die Anstellscheibe 9 an der Welle 5 und andererseits über die Anstellscheibe 10 an dem Ausgangskegel 2 abstützen. Hierbei sind die Anstellscheiben 9 bzw. 10 derart ausgestaltet, dass das Drehmoment von dem Abtriebskegel 2 auf die Anstellscheibe 10 über die Kugeln 11 auf die Anstellscheibe 9 und von dort auf die Abtriebswelle 5 übertragen wird. Die Führungsbahnen für die Kugeln 11 sind hierbei derart ausgestaltet, dass ein erhöhtes Drehmoment eine Rotation der beiden Anstellscheiben 9, 10 zueinander bedingt, die wiederum dazu führt, dass die Kugeln 11 entlang der Führungsbahnen verlagert werden, wodurch die Anstellscheiben 9 und 10 auseinander gedrückt werden. In einer idealisierten Anordnung, die an sich starr ist, werden Bewegungen nicht ausgeführt; das Drehmoment bedingt durch die schrägen Führungsbahnen unmittelbar eine Anpresskrafterhöhung. Auf diese Weise erzeugt die Anpresseinrichtung 8 eine vom Ausgangsdrehmoment abhängige Anpresskraft.

Der Vorteil dieser Anordnung besteht darin, dass sie als mechanische Einrichtung extrem kurze Reaktionszeiten aufweist und insbesondere auf Stöße im ausgangsseitigen Antriebsstrang sehr gut reagieren kann.

Parallel zu den Kugeln 11 werden die Platten 9, 10 durch eine Federanordnung 12 auseinander gedrückt, die der Anpresseinrichtung 8 eine gewisse Grundlast verleiht.

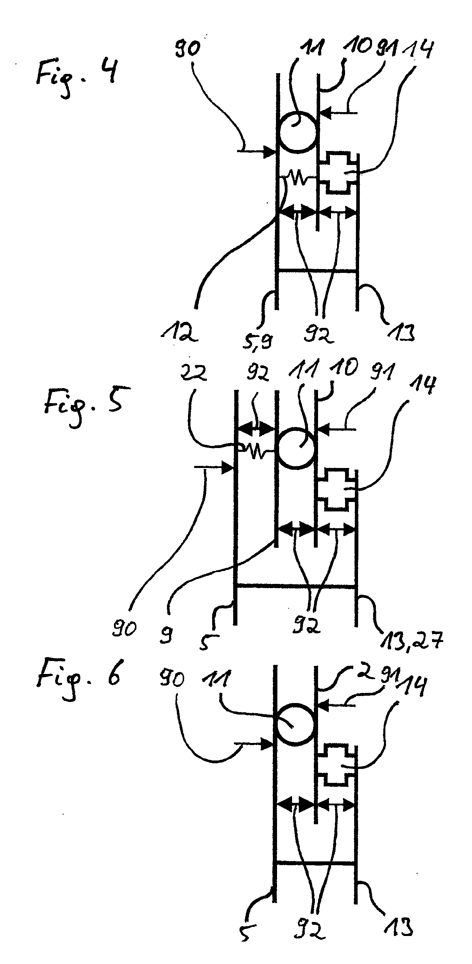

Leider lässt sich die Kennlinie der Anordnung aus den Platten 9 und 10 sowie den Kugeln 11 und der Feder 12 nur bedingt optimieren. Insofern weist die Kennlinie Bereiche auf, in denen eine übermäßige Anpresskraft bereitgestellt wird. Hierdurch werden die Gesamtverluste des entsprechenden Getriebes erheblich erhöht. Aus diesem Grunde weist die Anordnung aus Figur 1 eine Kraftkompensation, insbesondere für Teillastbereiche, auf. Bei diesem Ausführungsbeispiel erfolgt dieses hydraulisch, indem zwischen einer mit der Abtriebswelle 5 verbundenen Platte und der Anpressplatte 10 ein Druck hydraulisch erzeugt wird, welcher der von den Kugeln erzeugten Anpresskraft entgegenwirkt. Auf diese Weise kann die überschüssige bzw. nicht notwendige, von den Kugeln 11 und der Feder 12 erzeugte Anpresskraft hydraulisch kompensiert werden, indem von einem Bauteil 13, welches fest mit der Abtriebswelle 5 verbunden ist, eine Gegenkraft erzeugt wird. Die entsprechenden Verhältnisse sind in Figur 4 schematisch dargestellt, wobei die Stärke der Pfeile die jeweiligen Kräfte in ihrer Höhe widerspiegelt. Durch den Hydraulikdruck 14 wird somit eine zu große Kraft der Kugeln 11 bzw. der Feder 12 kompensiert, so dass die Lager 6, 7A nicht unnötig belastet werden. Hierbei deutet der Pfeil 90 äußere Kräfte von der Abtriebswelle 5, der Pfeil 91 äußere Kräfte von dem Ausgangskegel und die Pfeile 92 innere Kräfte.

Bei dem in Figur 1 dargestellten Ausführungsbeispiel wird der Hydraulikdruck 14 über eine Hydraulikleitung 15 bereitgestellt, die in einer Zusatzwelle 16 angeordnet ist, welche über eine Schraube 17 fest mit der Welle 5 verbunden ist. Die Schraube 17 schließt darüber hinaus eine Befüllöffnung 18, die im Zusammenspiel mit einer Leitung 19 und einer Hinterschneidung 20 dazu dient, den Hydraulikraum betriebssicher blasenfrei zu befüllen. Die Welle 16 weist an ihrem von der Antriebswelle 5 abgewandten Ende eine Hydraulikdichtung auf, so dass der hydraulische Druck 14 von außen in gewünschter Weise und ohne Weiteres aufgebaut bzw. gesteuert werden kann.

Die Anordnung nach Figur 1 weist darüber hinaus einen Montagekörper 21 auf, über den der Abtriebskegel 2 radial gelagert ist. Durch diesen Montagekörper 21 kann die Anpresseinrichtung 8 ohne Weiteres im Inneren des Abtriebskegels 2 montiert werden.

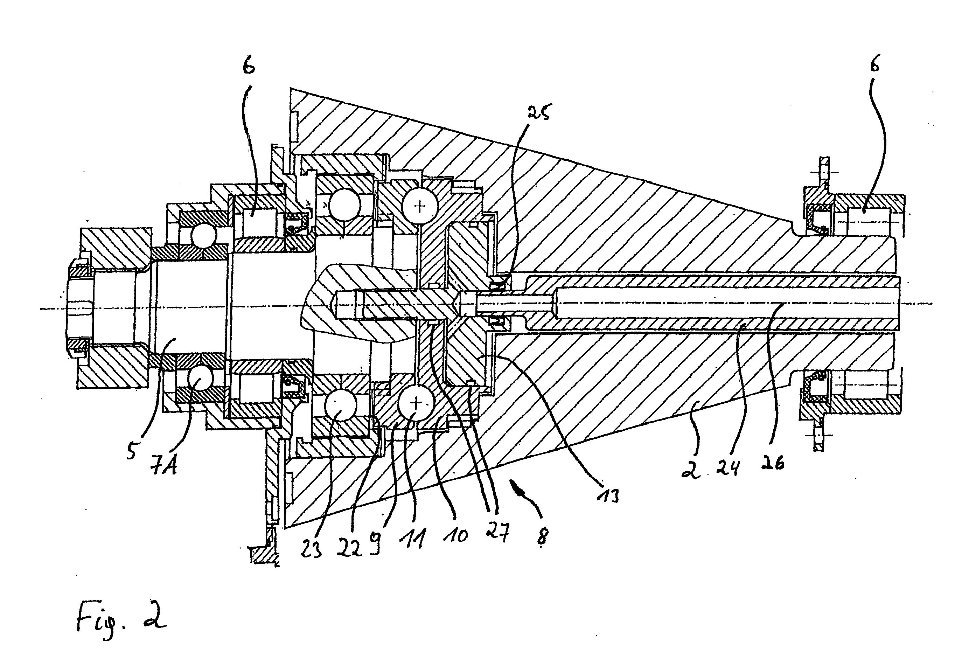

Die in Figur 2 dargestellte Anordnung entspricht im Wesentlichen der Ausführungsform nach Figur 1, so dass identisch wirkende Baugruppen auch mit identischen Bezugsziffern versehen sind und nicht erneut explizit erläutert werden.

Bei diesem Ausführungsbeispiel wird jedoch die Grundlast nicht durch eine parallel geschaltete Feder sondern durch eine mit der Anpresseinrichtung 8 in Reihe geschaltete Feder 22 erzeugt, die sich an der Abtriebswelle 5 abstützt, was bei vorliegendem Ausführungsbeispiel an einem Vierpunktlager 23 erfolgt, welches einerseits somit die Anpresskraft zwischen Anstellscheibe 9 und Abtriebswelle 5 überträgt und andererseits der Axiallagerung des Abtriebskegels 2 bezüglich der Abtriebswelle 5 dient.

Darüber ragt die Hydraulikzufuhr 24, entgegen der Hydraulikzufuhr 24 bei dem Ausführungsbeispiel nach Figur 1, bis weit in den Abtriebskegel 2 hinein, so dass die entsprechende Dichtung 25 unmittelbar an dem fest mit der Abtriebswelle 5 verbundenen Bauteil 13, nachfolgend Gegenplatte 13 genannt, angeordnet ist. Durch Beaufschlagen der in der Hydraulikzufuhr 24 vorgesehenen Leitung 26 mit einem Druck wird somit zwischen der Gegenplatte 13 und der Anstellscheibe 10 ein hydraulischer Druck 14 aufgebaut, welcher der von den Kugeln 11 aufgebrachten Anpresskraft entgegenwirkt und somit die Gesamtanpresskraft der Anpresseinrichtung 8 reduziert.

Wie unmittelbar aus Figur 2 ersichtlich, ist bei diesem Ausführungsbeispiel die Gegenplatte 13 in die Welle 5 geschraubt, während bei dem Ausführungsbeispiel nach Figur 1 eine zusätzliche Schraube mit der bereits vorstehend erwähnten Doppelfunktion hierfür zur Anwendung kommt. Der zwischen Anstellplatte 10 und Gegenplatte 13 vorgesehene Hydraulikraum ist über Dichtungen 27 (in Figur 1 nicht dargestellt) nach außen abgedichtet.

Wie unmittelbar aus Figur 5 ersichtlich, resultiert aus der in Figur 2 dargestellten Anordnung eine ähnliche Funktionsweise, wie bei dem in Figuren 1 und 4 dargestellten Ausführungsbeispiel. Auch hier wird durch den Druck 14 eine kompensierende Kraft erzeugt, so dass die Gesamtanpresskraft und somit die auf die Lager 6, 7A wirkende Verspannkraft über den Druck 14 auf ein Minimum reduziert werden kann.

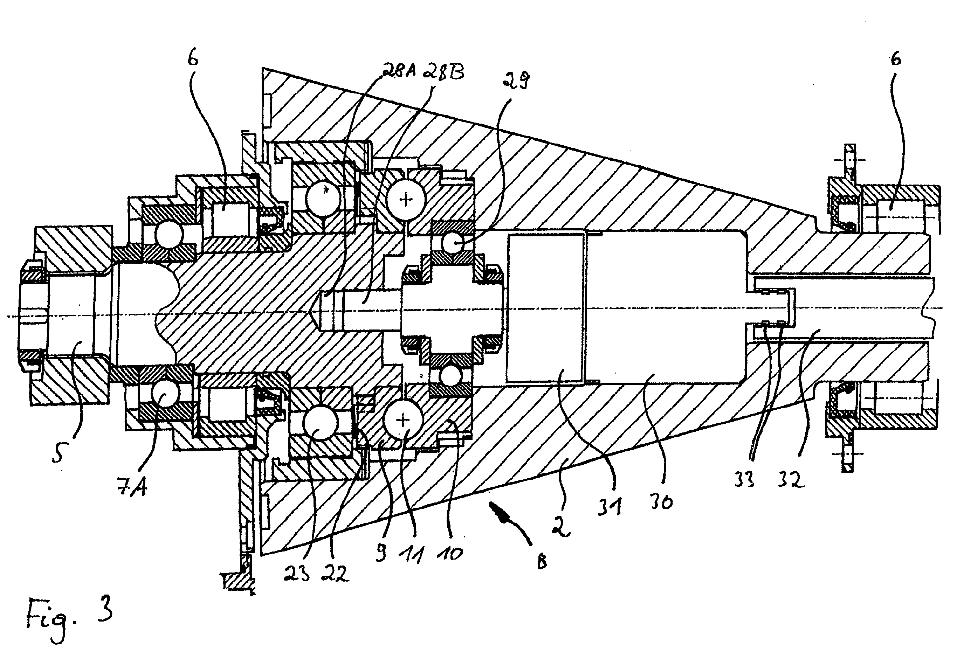

Statt einer Hydraulik kann für die zweite Teilanpresseinrichtung, der Druck 14, auch eine motorische Anordnung gewählt werden, wie in Figur 3 exemplarisch dargestellt, wobei das Ausführungsbeispiel nach Figur 3 im übrigen dem Ausführungsbeispiel nach Figur 2 entspricht und wie in Figur 5 dargestellt wirkt.

Auch diese Anordnung erzeugt über eine in Reihe geschaltete Federanordnung 22, die sich über ein Vierpunktlager an der Abtriebswelle 5 abstützt, eine Grundlast. Zur Umsetzung des motorischen Antriebs der zweiten Teilanpresseinrichtung 14 ist in einer Gewindebohrung 28A der Abtriebswelle 5 ein Gewindebolzen 28B vorgesehen, der sich über ein Vierpunktlager 29 an der Anstellplatte 10 und an dem Abtriebskegel 2 abstützt, wobei bei dieser Anordnung die Gewindebohrung 28A in ihrer Funktion der Funktion der Gegenplatte 13 entspricht. Der Gewindebolzen 28B kann über einen Motor 30, welcher über eine elektrische Leitung 32 und Schleifringe 33 angesteuert werden kann, und ein Getriebe 31 bezüglich der Welle 5 verlagert werden, wodurch eine variable Gegenkraft zu der von den Kugeln 11 und der Feder 22 erzeugten Anpresskraft erzeugt werden kann.

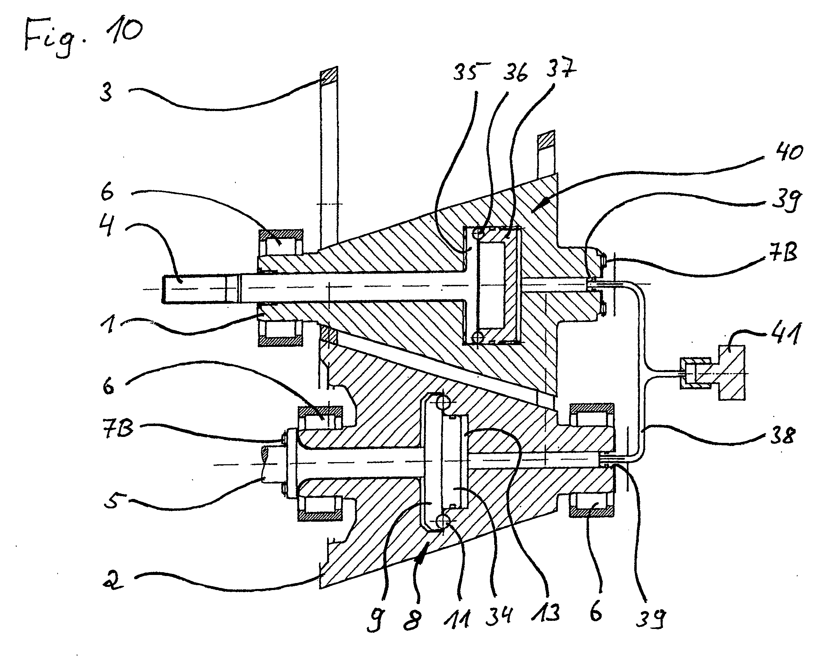

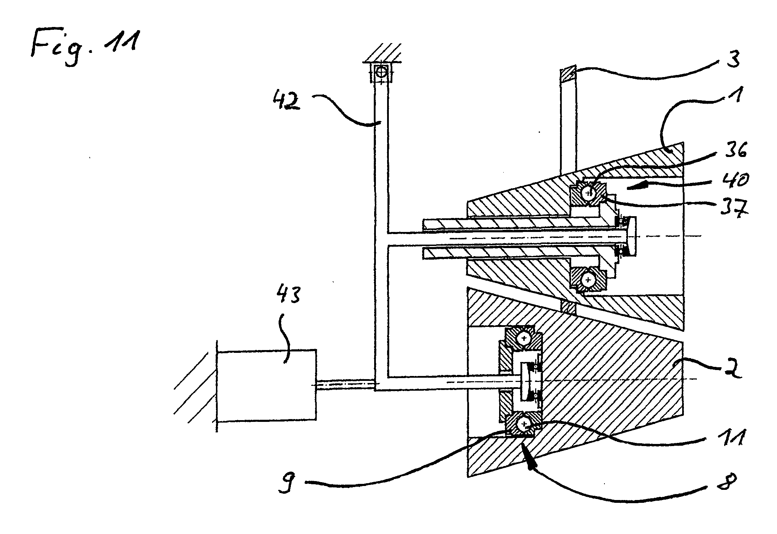

Wie in Figur 6 angedeutet, kann eine erfindungsgemäße Anordnung auch ohne eine Grundlast erzeugende Federanordnung umgesetzt werden. Schematische Anordnungen, die den Verhältnissen nach Figur 6 entsprechen, sind in Figuren 10 und 11 dargestellt. Auch hier ist eine Anpresseinrichtung 8 vorgesehen, bei welcher eine Anstellplatte 9 sich an der Abtriebswelle 5 abstützt und Kurvenbahnen für Kugeln 11 aufweist. Die hierzu korrespondierenden Kugelbahnen sind jedoch, statt wie bei den Ausführungsbeispielen nach Figuren 1 bis 5 in einer weiteren Anstellplatte, unmittelbar in dem Abtriebskegel 2 vorgesehen. Dementsprechend greift die zweite Teilanpresseinrichtung 14 über einen Druckraum 34 auch unmittelbar an dem Abtriebskegel 2 an. Im übrigen entspricht die Funktionsweise der Funktionsweise der bereits dargestellten Ausführungsbeispiele, so dass auf eine detaillierte Diskussion verzichtet wird. Ergänzend sei darauf hingewiesen, dass bei dem Ausführungsbeispiel nach Figur 10 die axiale Lagerung der Kegel 1, 2 über Axial-Zylinderrollenlager 7B erfolgt. Darüber hinaus erfolgt eine Ansteuerung der zweiten Teilanpresseinrichtung 14 bei diesem Ausführungsbeispiel vorrangig in Abhängigkeit vom Eingangsdrehmoment, welches mittels der Eingangswelle 4, einer mit der Eingangswelle 4 verbundenen Anstellscheibe 35, Kugeln 36 sowie einem drehfest mit dem Antriebskegel 1 verbundenen, aber axial verlagerbaren Kolben 37 erfasst und hydraulisch über eine Leitung 38 an den Druckraum 34 weitergegeben wird. Die Leitung 38 ist hierbei über Durchführungen 39 jeweils dichtend mit den Baugruppen, die mit den Kegeln 1, 2 rotieren, verbunden.

Neben der durch die Bauteile 35, 36, 37 gebildeten Eingangsdrehmomentansteuerung 40 kann die zweite Teilanpresseinrichtung 14 noch über einen Kolben 41 in Abhängigkeit von weiteren Parametern angesteuert bzw. angeregelt werden.

Eine mechanische Alternative zu der Ausführungsform nach Figur 10 stellt Figur 11 dar, wobei das ermittelte Eingangsdrehmoment jedoch über eine Hebelanordnung 42 an die zweite Teilanpresseinrichtung übermittelt wird. Über einen Servo 43 können darüber hinaus weitere Stellgrößen zur Regelung der zweiten Teilanpresseinrichtung genutzt werden.

Die zweite Teilanpresseinrichtung bzw. die gesamte Anpresseinrichtung kann über verschiedene Stellgrößen angesteuert bzw. geregelt werden. Dieses können insbesondere das Motormoment, die Eingangsdrehzahl, die Ausgangsdrehzahl, der Stellweg bzw. die Stellposition des Reibringes 3, die Temperatur des Getriebes bzw. eines Getriebeöls, die Raddrehzahlen bzw. beispielsweise das ABS-(Antiblockiersystem-)Signal, eine externe Stoßerkennung oder sonstige Parameter sein.

Die entsprechenden Messwerte können, wie bereits vorstehend erläutert, hydraulisch oder motorisch bzw. auf sonstige Weise an die Anpresseinrichtung 8 weitergegeben werden. Bei hydraulischen Systemen kann dieses insbesondere durch Pumpen, beispielsweise Zahnradpumpen bzw. durch bereits in einem Kraftfahrzeug vorhandene Pumpen und eine entsprechende Druckregelung geschehen. Darüber hinaus sind auch Kolbenanordnungen sowie elektromotorische Systeme denkbar.

Insbesondere kann beispielsweise eine durch einen Elektromotor 62 angetriebene Zahnradpumpe 61 vorgesehen sein, die aus einem Reservoir 64 Fluid fördern kann. Hierbei kann durch eine an den Elektromotor 62 angelegte Spannung 63 ein Drehmoment auf die Zahnradpumpe 61 aufgebracht werden, welches diese derart dreht, dass dadurch das Fluid bzw. die Anpresseinrichtung 8 einen dem durch das Drehmoment bedingten Druck entsprechenden Gegendruck erzeugt.

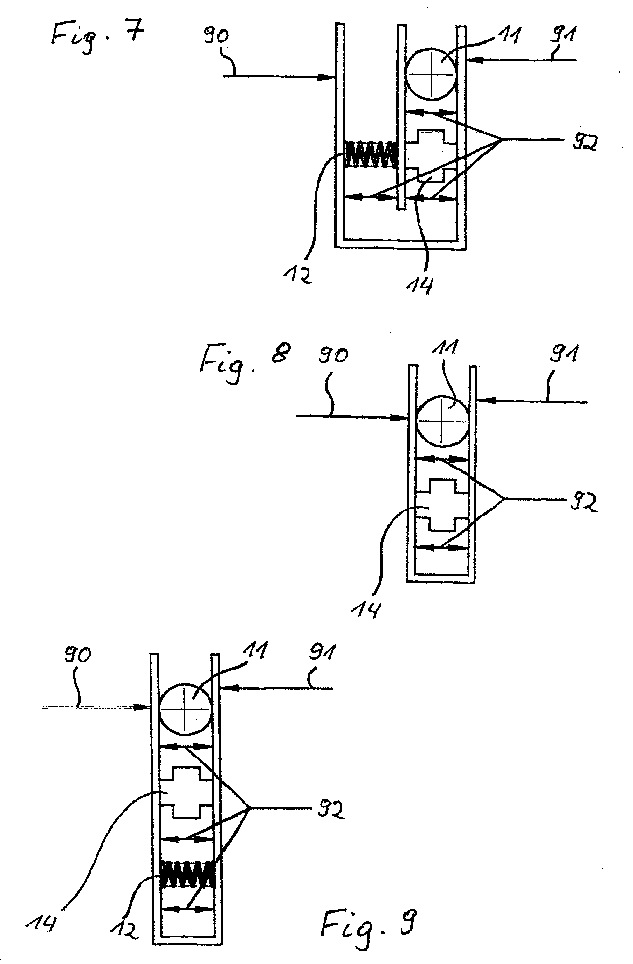

Eine ähnliche Funktionsweise ist in der Figur 7 dargestellt, bei welcher die inneren Kräfte 92 mittels zu einem hydraulischen Druck 14 parallel geschaltete Kugeln 11 und einer dazu in Reihe geschalteten Federanordnung 12 bereitgestellt werden. Den inneren Kräften 92 stehen die äußere Kraft 90 von der Abtriebswelle 5 sowie die äußere Kraft 91 von dem Ausgangskegel 2 gegenüber.

Die in der Figur 8 gezeigte alternative Funktionsweise umfasst eine Anordnung aus Kugeln 11 und einen dazu parallel geschalteten hydraulischen Druck 14, wobei die Kugeln 11 und der hydraulische Druck 14 innere Kräfte 92 hervorgerufen. Diesen inneren Kräften 92 stehen die äußere Kraft 90 von der Abtriebswelle 5 sowie die äußere Kraft 91 von dem Abtriebskegel 2 entgegen. Die Anordnung nach Figur 8 kommt wie die Anordnung nach Figur 6 ohne ein zusätzliches Federelement aus.

Bei dem Ausführungsbeispiel nach Figur 9 sind Kugeln 11, ein hydraulischer Druck 14 und ein Federelement 12 in ihrer Funktionsweise parallel geschaltet. Hieraus resultieren die inneren Kräfte 92, welche der äußeren Kraft 90 und der äußeren Kraft 91 entgegenstehen.

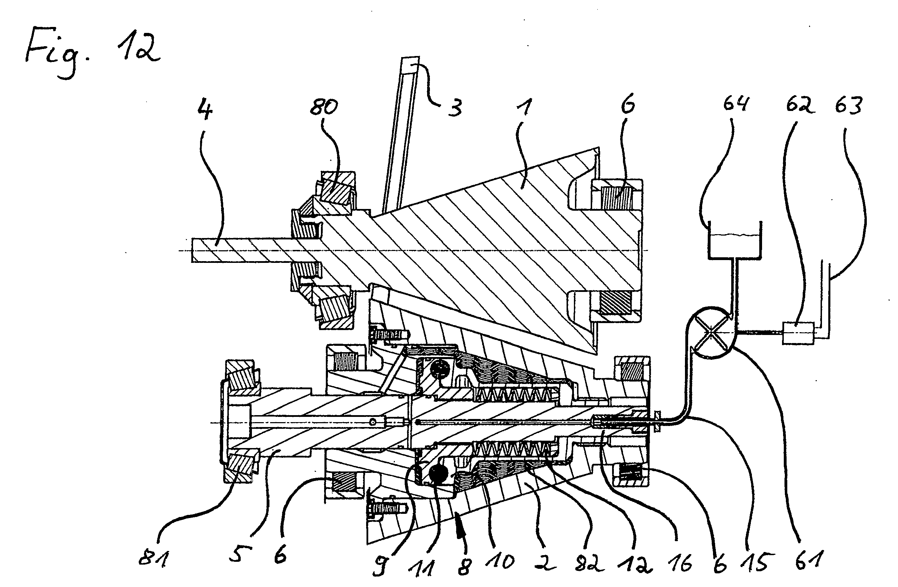

Das in der Figur 12 dargestellte Getriebe umfasst einen Eingangskegel 1 und einen Ausgangskegel 2, die über einen verstellbaren Reibring 3 miteinander wechselwirken. Der Eingangskegel 1 ist mit einer Antriebswelle 4 und der Ausgangskegel 2 mit einer Abtriebswelle 5 wirkverbunden. Der Eingangskegel 1 ist in diesem Ausführungsbeispiel zum einen durch Zylinderrollenlager und zum anderen durch Kegelrollenlager 80 gelagert. Insbesondere die Kegelrollenlager 80 eignen sich besonders gut dazu, neben radial wirkenden Kräften zusätzlich auch axial wirkende Kräfte aufzunelunen. Der Ausgangskegel 2 ist in diesem Ausführungsbeispiel lediglich durch Zylinderrollenlager 6 gelagert, wobei die Abtriebswelle 5 des Ausgangskegels 2 zusätzlich mittels Kegelrollenlager 81 gelagert ist. Insbesondere durch die Kegelrollenlager 81 sind die beiden Kegel 1 und 2 in axialer Richtung derart gegeneinander verspannt, dass die notwendigen Anpresskräfte aufgebracht werden können, um Drehmoment über den Reibring 3 von dem Eingangskegel 1 auf den Ausgangskegel 2 und umgekehrt übertragen zu können.

Zum Verspannen bzw. zum Erzeugen der notwendigen Anpresskräfte ist darüber hinaus zwischen der Abtriebswelle 5 und dem Ausgangskegel 2 eine Anpresseinrichtung 8 vorgesehen, während bei diesem Ausführungsbeispiel die Eingangswelle 4 ebenfalls unmittelbar mit dem Eingangskegel 1 verbunden ist. Die Anpresseinrichtung 8 ist auch bei diesem Ausrichtungsbeispiel in der Lage, den axialen Abstand zwischen dem Ausgangskegel 2 und dem Kegelrollenlager 81 an der Abtriebswelle 5 zu variieren bzw. - in verspanntem Zustand - entsprechend variierende Anpresskräfte zu erzeugen.

Es versteht sich, dass, wie vorstehend bereits beschrieben, die in diesem Ausführungsbeispiel vorgesehenen Lager 6, 80 und 81 auch durch andere Lageranordnungen ersetzt bzw. mit anderen Lageranordnungen kombiniert werden können, um die Kegel 1 und 2 einerseits radial und andererseits ausreichend axial verspannt zu lagern. Auch hydrodynamische oder hydrostatische Lager sind hierbei verwendbar.

Das Übersetzungsverhältnis des hier illustrierten Getriebes wird mittels einer Verlagerung des Reibringes 3 gewählt, wodurch auf die Gesamtanordnung unterschiedliche Kräfte, insbesondere unterschiedliche Drehmomente, wirken. Um die Anpresskräfte und damit auch die Reibverbindung zwischen den beiden Kegeln 1 und 2 den unterschiedlichen Betriebsbedingungen vorteilhaft anpassen zu können, umfasst die Anpresseinrichtung 8 zwei Anstellscheiben 9 und 10, die Führungsbahnen für Kugeln 11 aufweisen. Die Anstellscheibe 9 bzw. 10 sind derart ausgestaltet, dass das Drehmoment von dem Abtriebskegel 2 auf die Anstellscheibe 10 über die Kugeln 11 auf die Anstellscheibe 9 und von dort auf die Abtriebswelle 5 übertragen wird. Die Führungsbahnen für die Kugeln 11 sind hierbei derart ausgestaltet, dass ein erhöhtes Drelunoment einer Rotation der beiden Anstellscheiben 9 und 10 zueinander bedingt, die wiederum dazu führt, dass die Kugeln 11 entlang der Führungsbahn verlagert werden, wodurch die Anstellscheiben 9 und 10 auseinander gedrückt werden. Idealer Weise werden Rotationsbewegungen zwischen den beiden Anstellscheiben 9 und 10 nicht ausgeführt, wenn die Anordnung im Wesentlichen starr ist. Das Drehmoment bedingt hierbei durch die schrägen Führungsbahnen unmittelbar eine Anpresskrafterhöhung. Auf diese Weise erzeugt die Anpresseinrichtung 8 eine vom Ausgangsdrehmoment abhängige Anpresskraft. Vorteilhafter Weise hat die hier beschriebene Anordnung als mechanische Einrichtung extrem kurze Reaktionszeiten und kann insbesondere auf Stöße im ausgangsseitigem Antriebsstrang sehr gut reagieren.

Parallel zu den Kugeln 11 werden die Anstellscheiben 9 und 10 mittels einer Federanordnung 12 auseinandergedrückt, die in der Anpresseinrichtung 8 eine gewisse Grundlast bereitstellt. Da sich die Kennlinie der vorliegenden Anpresseinrichtung 8 nur bedingt optimieren lässt, weist die Anpresseinrichtung 8 eine Kraftkompensation, insbesondere für Teillastbereiche, auf. Bei diesem Ausführungsbeispiel erfolgt dieses hydraulisch, indem zwischen einer mit der Abtriebswelle 5 verbundene Platte der Anstellscheibe 10 ein Druck hydraulisch erzeugt, welcher der von den Kugeln 11 und der Federn 12 erzeugten Anpresskraft entgegenwirkt. Auf diese Weise kann die überschüssige bzw. nicht notwendige, von den Kugeln 11 und den Federn 12 erzeugte Anpresskraft hydraulisch kompensiert werden.

Der Druck wird über eine Hydraulikleitung 15 bereitgestellt, die in einer Zusatzwelle 16 angeordnet ist. Zwischen der Anpresseinrichtung 8 und dem Ausgangskegel 2 ist ein Ölraum 82 vorgesehen. Durch das in diesem Ölraum 82 angeordnete Öl werden Fliehkräfte, welche insbesondere auf das Öl in der Anpresseinrichtung 8 wirken, besser kompensiert. Um zur Regulierung der Anpresseinrichtung 8 eine genügend große Menge an Öl zur Verfügung zu haben, ist ein Reservoir 64 vorgesehen. Hierbei kann durch eine an dem Elektromotor 62 angelegte Spannung 63 ein Drehmoment auf eine Pumpe 61 aufgebracht werden, worüber die Pumpe 61 derart eingestellt wird, dass dadurch das Fluid bzw. die Anpasseinrichtung 8 einen dem durch das Drehmoment bedingten Druck entsprechenden Gegendruck erzeugt.

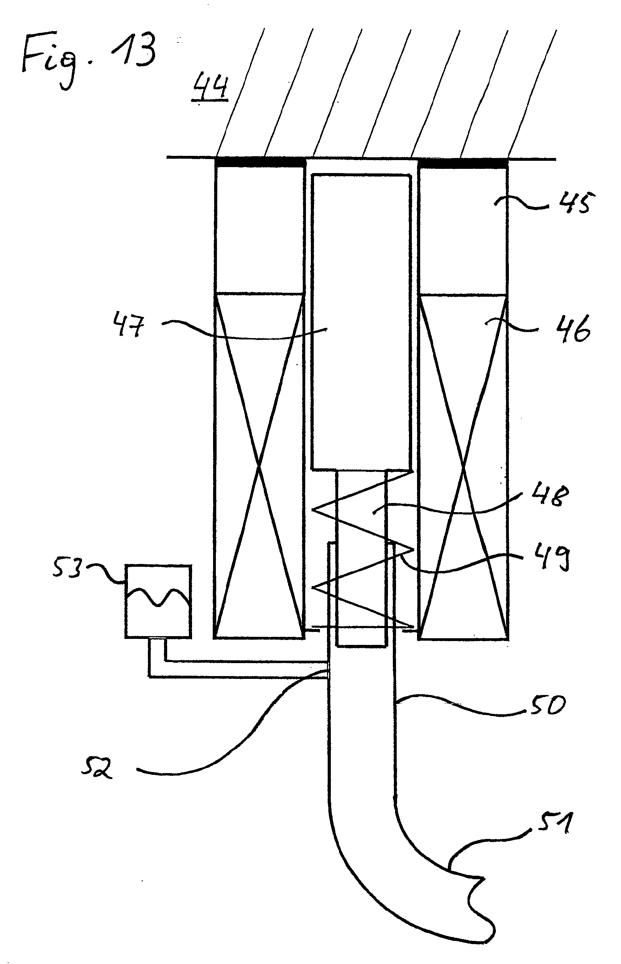

Als eine geeignete Alternative zeigt sich das in Figur 13 dargestellte Beispiel, bei welchem an einem Gehäuse 44 über einen Abstandhalter 45 eine Spule 46 vorgesehen ist, innerhalb welcher ein Kern 47 mit einem Kolben 48 angeordnet ist, der mittels einer Feder 49 in das Gehäuse 44 gedrückt wird. Wird die Spule 46 mit einem Strom beaufschlagt, so wird der Kern 47 in das Zentrum der Spule 46 entgegen der Federkraft 49 gedrückt, sodass sich der Kolben 48 in einen Zylinder 50 schiebt und auf diese Weise in diesem Zylinder 50 und in einer hieran anschließenden Leitung 51 einen in Abhängigkeit von der an der Spule 46 anliegenden Spannung variablen Druck erzeugt. Die Leitung 51 kann beispielsweise mit der Zufuhr 26 aus den Ausführungsbeispielen nach Figuren 1 und 2 bzw. mit der Leitung 38 aus dem Ausführungsbeispiel nach Figur 7 verbunden sein.

In dem Zylinder 50 ist eine Öffnung 52 vorgesehen, welcher bei einer Vorwärtsbewegung des Kolbens 48 als erstes dichtend verschlossen wird. Diese Öffnung 52 ist mit einem Überlauf-/Nachfüllbehälter 53 verbunden, so dass Hydraulikflüssigkeit in entspanntem Zustand der Gesamtanordnung nachgefüllt bzw. abgefüllt werden kann, um beispielweise einer Leckage oder einem durch externe Einflüsse bedingten Überdruck entgegenzuwirken. Es versteht sich, dass eine derartige elektrische Ansteuerung eines hydraulischen Kolbens und/oder eine derartige Leckagesicherung auch unabhängig von den übrigen Merkmalen vorliegender Erfindung vorteilhaft zur Anwendung kommen kann.

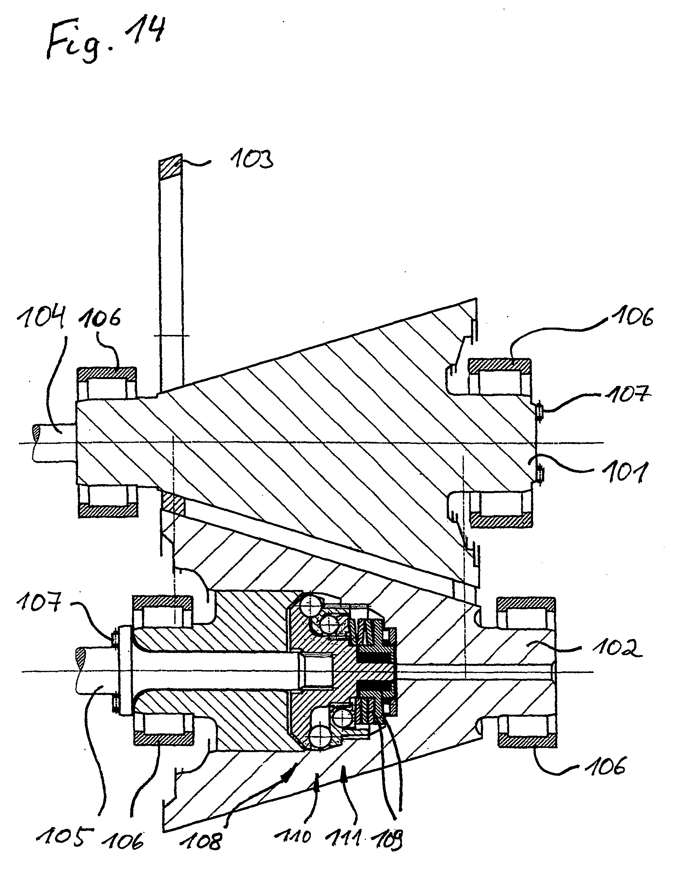

Das in Figuren 14 bis 22 dargestellte und einschließlich seiner Kennlinien erläuterte Reibgetriebe weist einen Eingangskegel 101 und einen Ausgangskegel 102 auf, die über einen verstellbaren Reibring 103 miteinander wechselwirken. Hierbei ist der Eingangskegel 101 mit einer Antriebswelle 104 und der Ausgangskegel 102 mit einer Abtriebswelle 105 wirkverbunden. Die Kegel 101, 102 sind bei diesem Ausführungsbeispiel in radialer Richtung durch Zylinderrollenlager 106 (lediglich in Figur 14 schematisch dargestellt) gelagert. Darüber hinaus sind die Kegel 101, 102 in axialer Richtung bei diesem Ausführungsbeispiel durch Axial-Zylinderrollenlager 107 gegeneinander verspannt, so dass die notwendigen Anpresskräfte aufgebracht werden können, damit Drehmoment über den Reibring 103 von dem Eingangskegel 101 auf den Ausgangskegel 102 und umgekehrt übertragen werden kann.

Zur Verspannung bzw. zum Erzeugen der notwendigen Anpresskräfte ist darüber hinaus zwischen der Abtriebswelle 105 und dem Ausgangskegel 102 eine Anpresseinrichtung 108 vorgesehen, während bei diesem Ausführungsbeispiel die Eingangswelle 104 unmittelbar mit dem Eingangskegel 101 verbunden ist. Die Anpresseinrichtung 108 ist in der Lage, den axialen Abstand zwischen dem Ausgangskegel 102 und dem Axial-Zylinderrollenlager 107 an der Abtriebswelle 105 zu variieren bzw. - in verspanntem Zustand - bedingt durch eine Federanordnung 109 entsprechend variierende Anpresskräfte zu erzeugen.

Es versteht sich, dass statt der Lager 106 und 107 auch andere Lageranordnungen, wie Axial-Schrägkugellager, Axial-Pendelrollenlager, Axial-Rillenkugellager, Kegelrollenlager oder ähnliche Lager bzw. Lagerarten miteinander kombiniert werden können, um die Kegel 101, 102 einerseits radial und andererseits ausreichend axial verspannt zu lagern. Ebenso können beispielsweise hydrodynamische oder hydrostatische Lager zur Anwendung kommen.

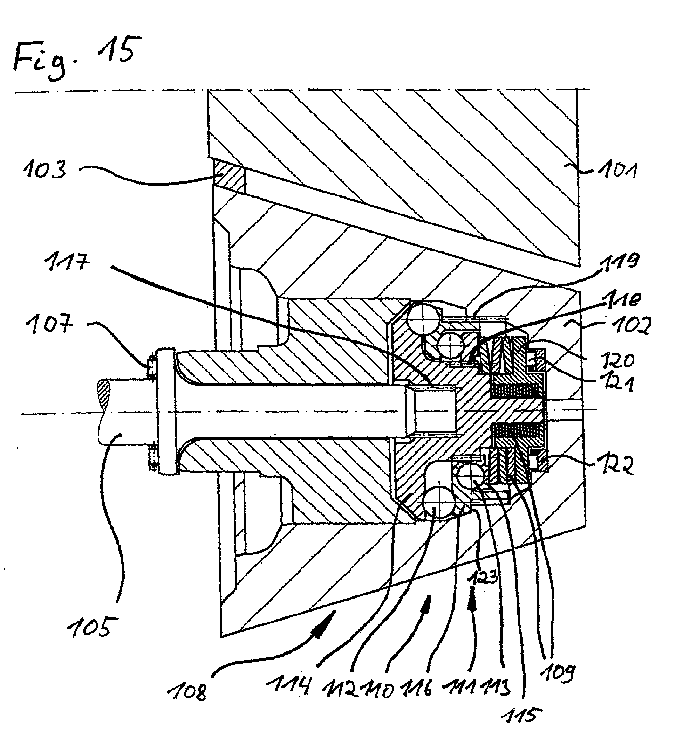

Im Betrieb kann der Reibring 103 in an dieser Stelle nicht näher erläuterter, aber bekannter Art und Weise verstellt und auf diese Weise das Übersetzungsverhältnis des Getriebes gewählt werden. Es versteht sich, dass im Betrieb die Gesamtanordnung insbesondere unterschiedlichen Drehmomenten unterliegt. Da es sich bei der Wirkverbindung zwischen den beiden Kegeln 101, 102 um eine Reibverbindung handelt, sind vorzugsweise die Anpresskräfte derart zu wählen, damit ein beherrschbarer Schlupf an dem Reibring 103 auftritt. Andererseits würden unnötig hohe Anpresskräfte zu einer verhältnismäßig starken Grundlast führen, die wiederum den Wirkungsgrad des Reibgetriebes beeinträchtigen würde. Aus diesem Grunde ist bei vorliegendem Ausführungsbeispiel eine drehmomentabhängige Anpresskraftregelung gewählt, wobei die Anpresskraft jedoch auch von anderen Betriebszuständen abhängig gewählt werden kann. Wie unmittelbar aus Figuren 14 und 15 ersichtlich, wird für die Anpresskraftregelung das Ausgangsdrehmoment als Stellgröße gewählt, wobei auch andere Betriebszustandsarten, wie beispielsweise die Gesamtlast oder das Eingangsdrehmoment diesbezüglich genutzt werden können, wie anhand der nachfolgend erläuterten Ausführungsbeispiele verdeutlicht werden wird.

Bei vorliegendem Ausführungsbeispiel umfasst die Anpresseinrichtung 108 zwei hinsichtlich ihrer Drehmomentmessung parallel und hinsichtlich ihrer Anpresskraftwirkung in Reihe geschaltete Anpresseinheiten 110 und 111, die jeweils durch innere Kugeln 112 bzw. äußere Kugeln 113 (siehe Figur 15) repräsentiert werden. Die Kugeln 112, 113 laufen jeweils in Kugelbahnen, die in kegel- bzw. wellenseitigen Anpressplatten 114, 115 und 116 vorgesehen sind. Hierbei sind bei diesem Ausführungsbeispiel die wellenseitigen Anpressplatten 114 und 115 drehfest bezüglich der Abtriebswelle 105 angeordnet, während die kegelseitige Anpressplatte 116 drehfest bezüglich des Abtriebskegels 102 angeordnet ist. Andererseits sind die Anpressplatten 114, 115, 116 über entsprechende Gleitlager 117, 118, 119 axial verlagerbar an diesen jeweiligen Baugruppen gelagert.

Während somit ein Drehmoment von dem Abtriebskegel 102 über das Lager 119 auf die Anpressplatte 116, von dort über die Kugeln 112, 113 sowie über die Anpressplatte 115 und das Lager 118 auf die Anpressplatte 114 und von der Anpressplatte 114 über das Lager 117 auf die Abtriebswelle 105 übertragen wird, können sich die Anpressplatten 114, 115, 116 axial gegen die Federkraft der Federanordnungen 109 und gegen ein Anpresslager 120, welches über ein Axial-Zylinderrollenlager 121 und eine Lagerplatte 122 an dem Abtriebskegel 102 abgestützt ist, verlagern und auf diese Weise in Abhängigkeit von den Kurvenbahnen eine drehmomentabhängige Anpresskraft erzeugen. Diesbezüglich zeigen Figuren 14 und 15 im oberen Randbereich der Anpresseinrichtung 108 die Anordnung bei niedrigem Drehmoment, während der untere Bereich die Anordnung bei hohem Drehmoment darstellt, wobei im unteren Bereich erkennbar ist, dass die Anpressplatte 116 bei höheren Drehmomenten an einer Schulter 123 des Abtriebskegels 102 anliegt, so dass auf diese Weise die Kennlinie der Gesamtanordnung ohne Weiteres drehmomentabhängig beeinflusst werden kann.

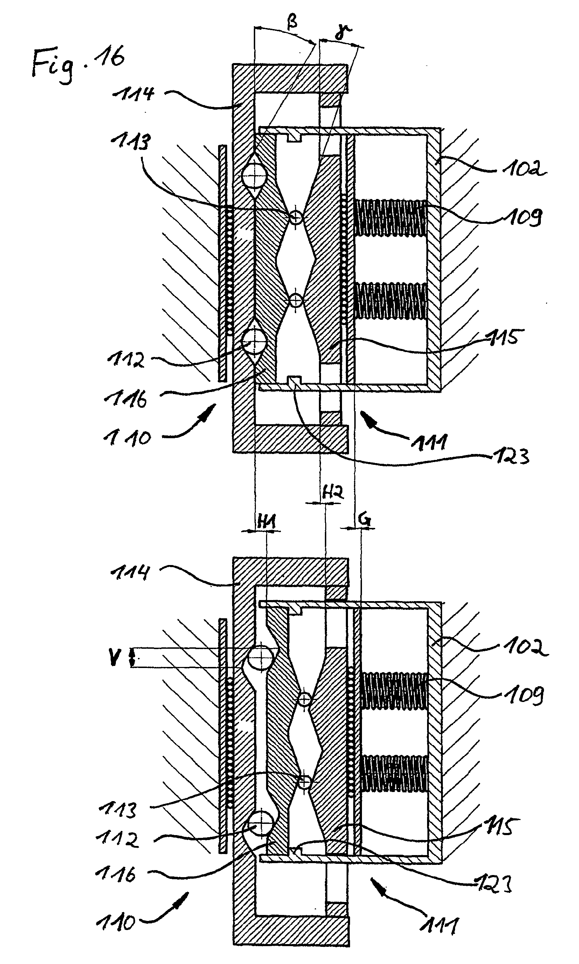

Hierbei zeigt Figur 16 schematisch in flächiger Form das Zusammenspiel der beiden Anpresseinheiten 110 und 111, wobei für Baugruppen, die den Baugruppen aus Figuren 14 und 15 gleichwirkend sind, auch identische Bezugsziffern vergeben sind. Wie unmittelbar ersichtlich laufen die Kugeln 112, 113 in ausgestalteten Kugelbahnen mit verschiedenen Neigungen β und γ. Es können - ggf. - auch komplexere Bahnen zur Anwendung kommen, wobei insbesondere lineare Bahnen aus Gründen der Zuverlässigkeit, beispielsweise gegen Spiel oder thermische Effekte, vorteilhaft sind. Bei gegebener Verlagerung bzw. bei gegebenen Drehmoment, wie dieses beispielsweise im unteren Teil der Figur 16 anhand eines Verstellweges V gegenüber der Anordnung des oberen Teils der Figur 16 dargestellt ist, bedingen diese Kugelbahnen jeweils einen Hub H1 bzw. H2, woraus ein Gesamthub G resultiert. Durch den Anschlag wird der Hub H1 begrenzt, so dass der Gesamthub G nicht linear vom Verstellweg V abhängt.

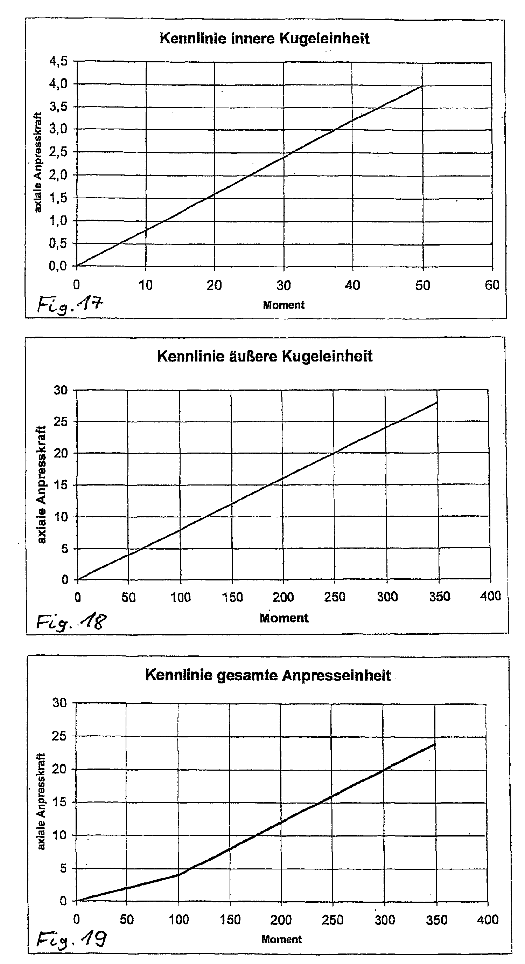

Die Kugelbahnen können beispielsweise derart ausgestaltet werden, dass die in Figuren 17 und 18 dargestellten Kennlinien resultieren. Wegen der drehmomentbezogenen Parallelschaltung folgt hieraus die in Figur 19 dargestellte Kennlinie, wobei wegen der Parallelschaltung hinsichtlich des Drehmoments die Momente addiert und wegen der Reihenschaltung hinsichtlich der axialen Anpresskraft die Anpresskraft bei beiden Anpresseinheiten identisch ist. Mit Erreichen der Schulter 123 trägt lediglich die äußere Anpresseinheit 111 mit ihrer Kennlinie zur Gesamtkennlinie bei.

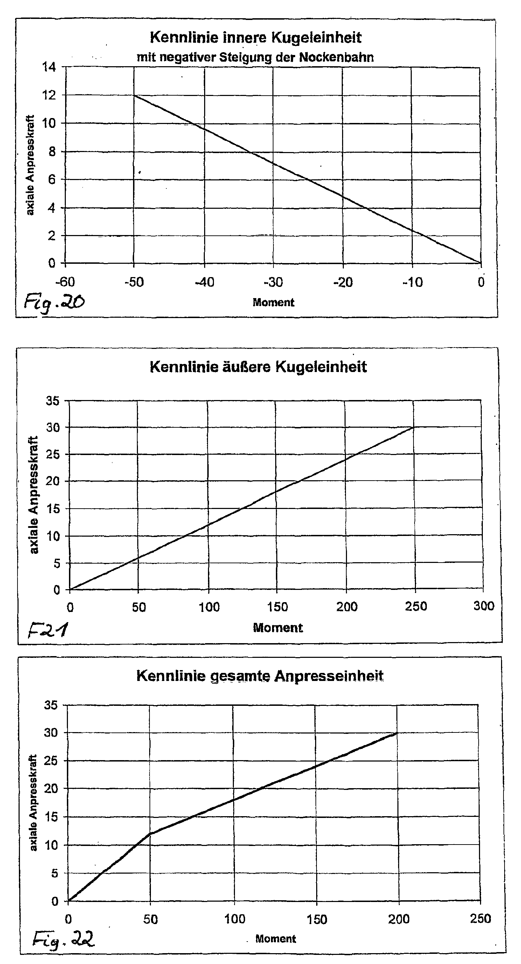

Eine andere Kennlinienausgestaltung zeigen Figuren 20 bis 21, wobei durch die negative Steigung bei der inneren Anpresseinheit eine besonders wünschenswerte Gesamtkennlinie (Figur 22) resultiert.

Wie unmittelbar aus den Figuren 17 bis 22 ersichtlich, weisen bei vorliegenden Ausführungsbeispielen die Anpresseinheiten eine Betriebszustand-Anpresskraft-Kennlinie bzw. eine Drehmoment-Anpresskraft-Kennlinie mit einer im Wesentlichen konstanten Steigung auf. Durch die Verwendung zweier Anpresseinheiten lässt sich trotz dieser im Wesentlichen konstanten Steigungen eine an die jeweiligen Erfordernisse angepasste Kennlinie realisieren. Dieses ist unter anderem dadurch möglich, dass die beiden Anpresseinheiten 110, 111 bei einem ersten Drehmoment jeweils einen ersten Beitrag zur Anpresskraft erbringen und bei einem zweiten Drehmoment jeweils einen zweiten Beitrag zur Anpresskraft erbringen, wobei die Differenz zwischen ersten und zweiten Beitrag der ersten Anpresseinrichtung 110 von der Differenz zwischen ersten und zweiten Beitrag der zweiten Anpresseinrichtung 111 abweicht.

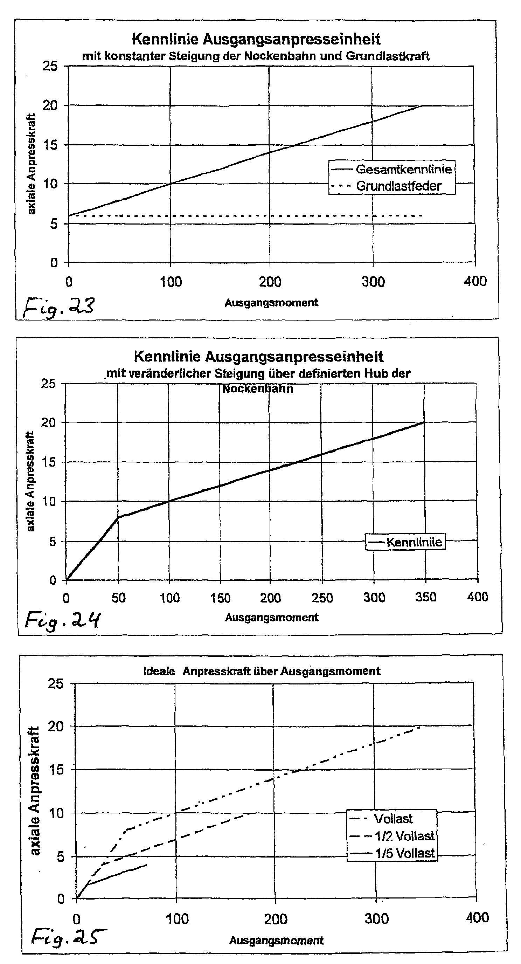

In der Regel werden Reibgetriebe in einem bestimmten Betriebsintervall bezüglich verschiedener Betriebszustandsarten betrieben. Hinsichtlich der Anpresskraft ergibt sich hierbei in der Regel die Anforderung, dass am unteren Ende dieses Intervalls eine bestimmte erste Anpresskraft und am oberen Ende dieses Intervalls eine höhere Anpresskraft vorliegen soll. Um hinsichtlich eventueller Toleranzen keine Probleme zu bekommen, kann es vorteilhaft sein, im Betriebsintervall eine konstante Steigung der Betriebszustand-Anpresskraft-Kennlinie zwischen diesen beiden Punkten vorzusehen. Unter diesen Voraussetzungen kann mit einer lediglich eine Anpresseinheit umfassenden Anpresseinrichtung beispielsweise die in Figur 23 dargestellte Kennlinie umgesetzt werden, auch wenn das Betriebsintervall lediglich zwischen 50 Nm und 350 Nm liegt. Dieses hat jedoch zur Folge, dass in dem System eine erhebliche Grundlast verbleibt, welche den Wirkungsgrad nennenswert reduziert. Diesem lässt sich beispielsweise dadurch begegnen, dass die Kurvenbahn eine veränderliche Steigung erhält, wie dieses in Figur 24 dargestellt ist. Hierbei weist die Kennlinie vorzugsweise im Betriebsbereich zwischen 50 Nm und 350 Nm eine im Wesentliche konstante Steigung und fällt unterhalb des Betriebsbereiches auf eine Anpresskraft in der Nähe von 0 N, insbesondere unter 1 N, im Ruhezustand (0 Nm) ab. Auf diese Weise wird die Grundlast im Gesamtsystem erheblich reduziert, wodurch der Gesamtwirkungsgrad gesteigert werden kann. Eine veränderliche Steigung der Kurvenbahn bei einer Anpresseinheit birgt jedoch Toleranzprobleme in sich, was vorliegende Erfindung durch Verwendung wenigstens zweier Anpresseinheiten, wie bereits vorstehend beschrieben, verhindert.

Vorzugsweise schlägt die Erfindung vor, dass, wie insbesondere in Figuren 24 und 25 dargestellt, die Betriebszustand-Anpresskraft-Kennlinie in einem Betriebsbereich (vergl. 50 Nm bis 350 Nm in Figur 24 bzw. 25) eine geringere mittlere Steigung aufweist, als unterhalb dieses Betriebsbereiches. Hierdurch lässt sich die Grundlast des Gesamtsystems erniedrigen, wodurch der Wirkungsgrad steigt. Andererseits sind auch Anordnungen denkbar, die eine Kennlinie ähnlich der in Figur 19 dargestellten Kennlinie mit einem Betriebsbereich zwischen 100 Nm und 350 Nm wünschenswert erscheinen lassen. Auch eine derartige Kennlinie lässt sich insbesondere durch zwei Anpresseinheiten bei geringer Toleranzempfindlichkeit realisieren.

Um darüber hinaus Verluste in dem Gesamtsystem zu minimieren, kann es vorteilhaft sein, die Anpresskraft in Abhängigkeit von einem zweiten Betriebszustand, insbesondere beispielsweise von der Gesamtlast bzw. von einem Eingangsdrehmoment, zu reduzieren, wie dieses beispielsweise in Figur 25 dargestellt ist. Auf diese Weise lässt sich der Wirkungsgrad des Gesamtsystems weiter erhöhen.

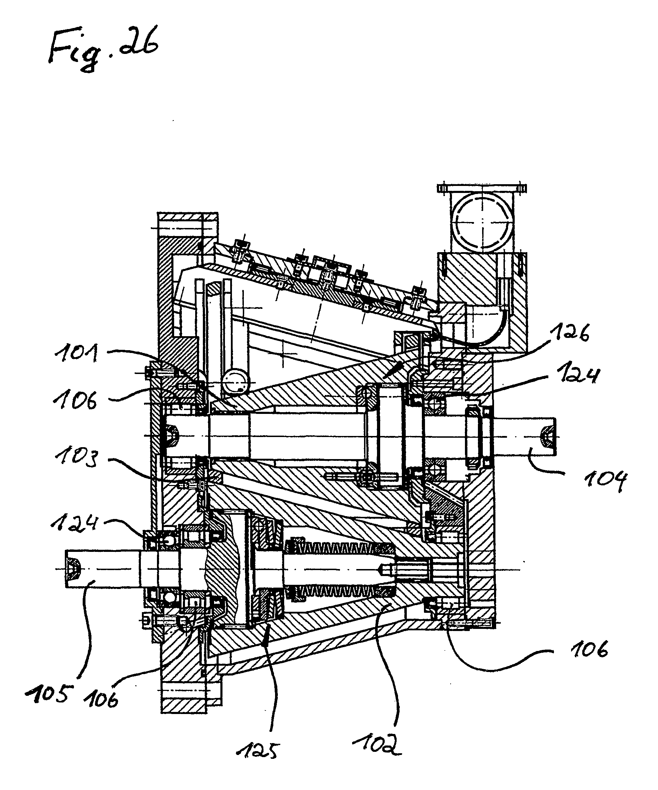

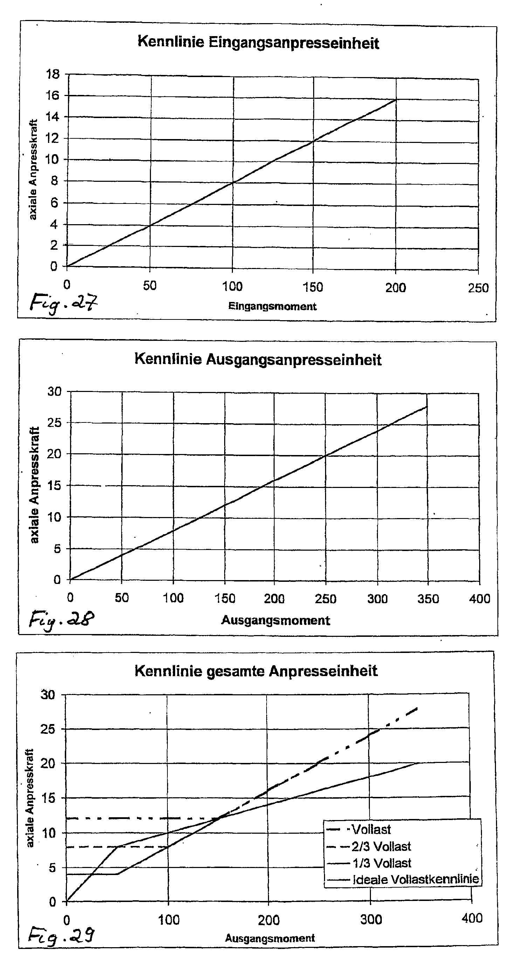

Letzteres kann beispielsweise durch die in Figur 26 dargestellte Anordnung gewährleistet werden. Diese Anordnung entspricht im Wesentlichen der in den Figuren 28 und 29 dargestellten Anordnung, wobei die Kegel 101 und 102 bei dieser Anordnung, abgesehen von einer Lagerung durch die Zylinderrollenlager 106, in axialer Richtung durch Schrägkugellager 124 gelagert sind.

Auch bei diesem Ausführungsbeispiel ist die Anpresseinrichtung durch zwei Anpresseinheiten 125, 126 gebildet. Abweichend von der Ausgestaltung bei der Anordnung nach den Figuren 28 und 29 ist jedoch eine Anpresseinheit 125 am Ausgangskegel 102 und die andere Anpresseinheit 126 am Eingangskegel 101 angeordnet. Auf diese Weise kann die gesamte Anpresseinrichtung sowohl das Eingangsmoment als auch das Ausgangsmoment unmittelbar ermitteln und in eine Anpresskraft überführen. Die Anpresseinheiten 125, 126 weisen die Figuren 27 und 28 dargestellten Kennlinien auf. Hieraus resultiert die in Figur 29 dargestellte Kennlinie, die im Wesentlichen der Kennlinie der Ausgangsanpresseinheit 125 entspricht, jedoch bei niedrigen Momenten lastabhängig in eine Horizontale übergeht. Die Steigung der Kennlinie der Ausgangsanpresseinheit 125 ist dabei derart gewählt, dass diese Kennlinie die ideale Volllastkennlinie im Betriebsintervall schneidet, so dass bei hohen Ausgangsmomenten eine ausreichend hohe Anpresskraft resultiert. Die Gesamtanordnung ist darüber hinaus derart ausgelegt, dass bei Volllast auch im unteren Drehzahlbereich die ideale Volllastkennlinie nicht unterschritten wird. Bei Teillasten kann die ideale Volllastkennlinie lastabhängig unterschritten werden, so dass hierdurch die Gesamtlast im System weiter reduziert wird, obwohl an sich im Volllastbetrieb zu hohe Anpresskräfte bereitgestellt werden. Durch Wahl der Steigung der Kennlinie für die Ausgangsanpresseinheit 125 kann deren Schnittpunkt mit der idealen Volllastkennlinie verschoben werden, um auf diese Weise die Gesamtverluste zu minimieren. Wie unmittelbar aus Figur 29 ersichtlich, kann die Steigung der Kennlinie der Ausgangsanpresseinheit 125 nicht gleich der Steigung der idealen Volllastkennlinie im Betriebsbereich gewählt werden, da dann die Effekte durch die zweite Anpresseinheit 126 nicht zum Tragen kommen.

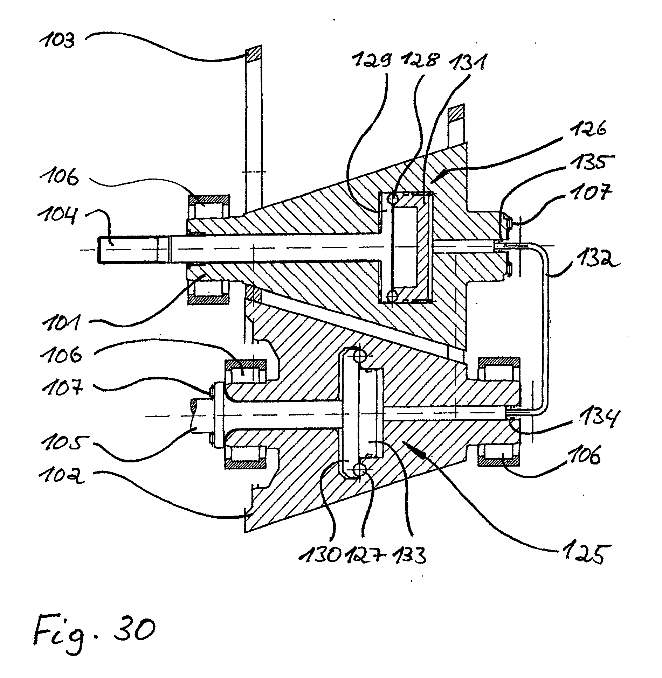

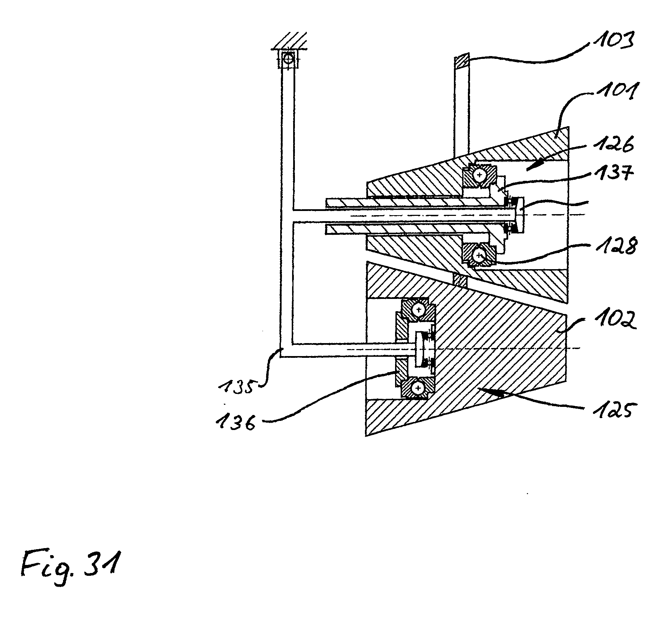

Letzteres ist andererseits bei einer Kopplung der beiden Anpresseinheiten 125 und 126 möglich, wie dieses anhand der Figuren 30 und 31 beispielhaft dargestellt ist. Auch diese Anordnungen entsprechen im Wesentlichen den Anordnungen nach Figuren 28 und 29 bzw. 26, wobei identisch wirkende Baugruppen auch identisch bezeichnet sind.

Auch bei diesen Ausführungsformen sind die Anpresseinheiten 125, 126 jeweils in verschiedenen Getriebegliedern des Reibgetriebes angeordnet, wie dieses bereits bei der Ausführungsform nach Figur 26 der Fall ist. Hierbei umfassen die Anpresseinheiten 125, 126 jeweils Kugelanordnungen 127, 128, die sich jeweils auf Anpressplatten 129, 130 der Eingangswelle 104 bzw. der Ausgangswelle 105 abstützen. Andererseits stützen sich die Kugeln 128 an einer Anpressplatte 131 ab, die axial verlagerbar aber drehfest bezüglich des Eingangskegels 101 vorgesehen ist. Diese Anpressplatte dient gleichzeitig als Kolben für eine hydraulische Rückkopplung 132 mit einem Kolben 133, der seinerseits mit der Anpressplatte 130 verbunden ist. Bei der ausgangsseitigen Anpresseinheit 125 ist eine weitere Anpressplatte nicht vorgesehen, da die Kugeln 127 im Übrigen unmittelbar an dem Abtriebskegel 102 angeordnet sind, wobei diesbezüglich auch eine separate Anpressplatte zur Aufnahme der entsprechenden Kurvenbahnen vorgesehen sein kann.

Die hydraulische Rückkopplung 32 ist über Durchführungen 134, 135 in das Innere der Kegel 101, 102 geleitet, wobei statt einer derartigen hydraulischen Rückkopplung 132 auch ein mechanisches System 135 entsprechend der Anordnung nach Figur 31 vorgesehen sein kann, welches mit entsprechenden Platten 136, 137 der Anpresseinheiten 125, 126 wechselwirkt.

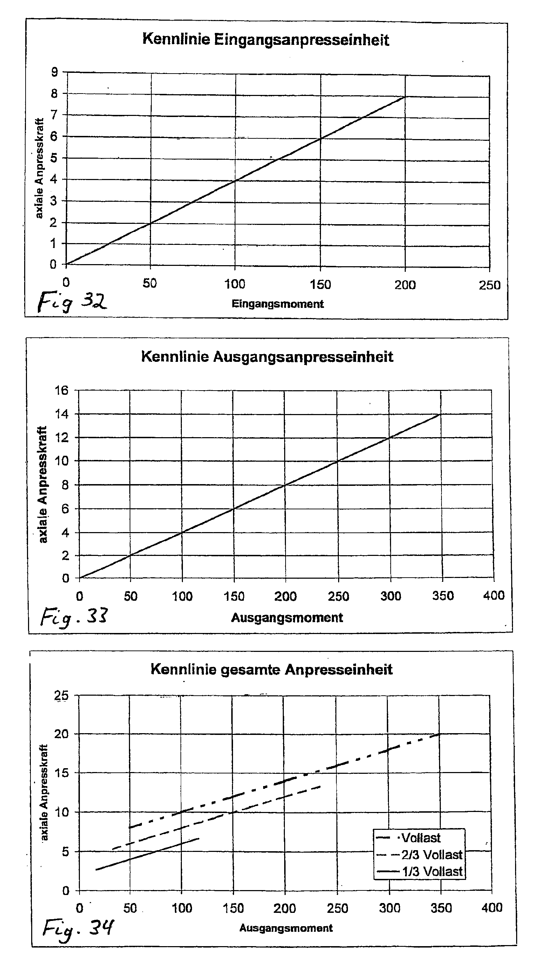

Eine derartige Kopplung ermöglicht es, die Ausgangsanpresseinheit 125 in ihrer Kennlinie exakt mit der Steigung der Idealkennlinie im Betriebsbereich (siehe beispielsweise Figur 25) zu wählen. Durch die Eingangsanpresseinheit 126 wird diese Kennlinie dann auf die gewünschte Höhe angehoben. Bei niedrigen Lasten erfolgt dementsprechend eine lastabhängige Absenkung, so dass die Gesamtanordnung der Idealkennlinie nach Figur 25 im Wesentlichen erfolgt, wie dieses aus Figur 34 ersichtlich ist.

## Patentansprüche

1. Kegelreibringgetriebe mit einem Eingangskegel, einem Ausgangskegel und einem einen der Kegel umgreifenden Reibring als aufeinander wälzenden, ein Drehmoment übertragende Getriebeglieder (1, 2, 3), und mit einer Anpresseinrichtung zum Verspannen der Getriebeglieder (1, 2, 3) mit Mitteln zum Erfassen einer relevanten Kenngröße, wie insbesondere des übertragenden Drehmoments, und mit Mitteln zum Aufbringen einer der erfassten Kenngröße entsprechenden Anpresskraft, ***dadurch gekennzeichnet, dass*** die Anpresseinrichtung zumindest zwei Teilanpresseinrichtungen (9, 10, 11; 14) umfasst, von denen die erste der beiden Teilanpresseinrichtungen eine kürzere Reaktionszeit als die zweite der beiden Teilanpresseinrichtungen aufweist.

2. Kegelreibringgetriebe nach Anspruch 1, ***dadurch gekennzeichnet, dass*** die erste Teilanpresseinrichtung (9, 10, 11) ungeregelt ist.

3. Kegelreibringgetriebe nach Anspruch 1 oder 2, ***dadurch gekennzeichnet, dass*** die zweite Teilanpresseinrichtung (14) geregelt ist.

4. Kegelreibringgetriebe mit einem Eingangskegel, einem Ausgangskegel und einem einen der Kegel umgreifenden Reibring als aufeinander wälzenden, ein Drehmoment übertragende Getriebeglieder (1, 2, 3), und mit einer Anpresseinrichtung zum Verspannen der Getriebeglieder (1, 2, 3) mit Mitteln zum Erfassen einer relevanten Kenngröße, wie insbesondere des übertragenden Drehmoments, und mit Mitteln zum Aufbringen einer der erfassten Kenngröße entsprechenden Anpresskraft, ***dadurch gekennzeichnet, dass*** die Anpresseinrichtung zumindest zwei Teilanpresseinrichtungen (9, 10, 11; 14) umfasst und die erste Teilanpresseinrichtung (9, 10, 11) eine Anpresskraft bereitstellt, die größer oder gleich der von der Anpresseinrichtung bereitzustellenden Anpresskraft ist, und die zweite Teilanpresseinrichtung (14) die von der ersten Teilanpresseinrichtung (9, 10, 11) bereitgestellte Anpresskraft reduziert.

5. Kegelreibringgetriebe nach einem der Ansprüche 1 bis 4, ***dadurch gekennzeichnet, dass*** die zweite Teilanpresseinrichtung (14) eine der von der ersten Teilanpresseinrichtung (9, 10, 11) aufgebrachten Kraft entgegengesetzte Kraft aufbringt.

6. Kegelreibringgetriebe nach einem der Ansprüche 1 bis 5, ***dadurch gekennzeichnet, dass*** die zweite Teilanpresseinrichtung (14) die von der ersten Teilanpresseinrichtung (9, 10, 11) aufgebrachte Kraft teilweise kompensiert.

7. Getriebe nach einem der Ansprüche 1 bis 6, ***dadurch gekennzeichnet, dass*** die zweite Teilanpresseinrichtung (14) hydraulisch angesteuert ist.

8. Getriebe nach Anspruch 7, ***dadurch gekennzeichnet, dass*** die hydraulische Ansteuerung einen elektromagnetisch angesteuerten Kolben (48) umfasst.

9. Getriebe nach Anspruch 8, ***dadurch gekennzeichnet, dass*** der Kolben auf seinem einen druckerzeugenden Weg zunächst eine Überlauf-/Nachfüllöffnung (52) verschließt.

10. Getriebe nach Anspruch 7, ***dadurch gekennzeichnet, dass*** die hydraulische Ansteuerung eine Zahnradpumpe (61) umfasst.

11. Getriebe nach Anspruch 10, ***dadurch gekennzeichnet, dass*** die Zahnradpumpe von einem Elektromotor (62) angesteuert wird, der eine spannungsabhängiges Drehmoment aufbringt.

12. Getriebe nach einem der Ansprüche 1 bis 11 mit wenigstens zwei Betriebszuständen, bei welchen wenigstens ein Eingangsglied (101) und wenigstens ein Ausgangsglied (102) mittels wenigstens einer Anpresseinrichtung mit einer in Abhängigkeit von dem jeweiligen Betriebszustand variierenden Anpresskraft gegeneinander gepresst werden, ***dadurch gekennzeichnet, dass*** die Anpresseinrichtung (108; 125, 126) wenigstens zwei Anpresseinrichtungen (110, 111; 125, 126) umfasst.

13. Getriebe nach einem der Ansprüche 1 bis 12, ***dadurch gekennzeichnet, dass*** die beiden Anpresseinheiten (110, 111; 125, 126) unterschiedliche Betriebszustand-Anpresskraft-Kennlinien aufweisen.

14. Getriebe nach einem der Ansprüche 1 bis 13, ***dadurch gekennzeichnet, dass*** die beiden Anpresseinheiten (110, 111; 125, 126) im ersten Betriebszustand jeweils einen ersten Beitrag zur Anpresskraft und im zweiten Betriebszustand jeweils einen zweiten Beitrag zur Anpresskraft erbringen, wobei die Differenz zwischen ersten und zweiten Beitrag der ersten Anpresseinrichtung von der Differenz zwischen ersten und zweiten Beitrag der zweiten Anpresseinrichtung abweicht.

15. Getriebe nach einem der Ansprüche 1 bis 14, ***dadurch gekennzeichnet, dass*** die beiden Anpresseinheiten bezüglich der Betriebszustandsermittlung und/oder bezüglich der Anpresskraft parallel wirkend ausgebildet sind.

16. Getriebe nach einem der Ansprüche 1 bis 15, ***dadurch gekennzeichnet, dass*** die beiden Anpresseinheiten (110, 111; 125, 126) bezüglich der Betriebszustandsermittlung und/oder bezüglich der Anpresskraft in Reihe wirkend ausgebildet sind.

17. Getriebe nach einem der Ansprüche 1 bis 16, ***dadurch gekennzeichnet, dass*** wenigstens eine Anpresseinheit (110, 111; 125, 126) eine Betriebszustand-Anpresskraft-Kennlinie mit einer im Wesentlichen konstanten Steigung aufweist.

18. Getriebe nach einem der Ansprüche 1 bis 17, ***dadurch gekennzeichnet, dass*** die Anpresseinrichtung (108; 125, 126) wenigstens zwei miteinander gekoppelte Anpresseinheiten (110, 111; 125, 126) umfasst.

19. Getriebe nach Anspruch 18, ***dadurch gekennzeichnet, dass*** die Kopplung mechanisch ausgebildet ist.

20. Getriebe nach Anspruch 18 oder 19, ***dadurch gekennzeichnet, dass*** die Kopplung hydrodynamisch oder hydrostatisch ausgebildet ist.

21. Getriebe nach einem der Ansprüche 1 bis 20, ***dadurch gekennzeichnet, dass*** eine Anpresseinheit (126) eingangsseitig und eine Anpresseinheit (125) ausgangsseitig angeordnet ist.

22. Getriebe nach einem der Ansprüche 1 bis 21 mit wenigstens zwei Betriebszuständen, bei welchem wenigstens ein Eingangsglied (101) und wenigstens ein Ausgangsglied (102) mittels wenigstens einer Anpresseinrichtung (108; 125, 126) mit einer in Abhängigkeit von dem jeweiligen Betriebszustand variieren Anpresskraft gegeneinander gepresst werden, ***dadurch gekennzeichnet, dass*** die Anpresseinrichtung eine Betriebszustand-Anpresskraft-Kennlinie aufweist, die zwischen einem Ruhezustand des Reibgetriebes und einem ersten Betriebszustand eine andere mittlere Steigung als zwischen dem ersten Betriebszustand und einem zweiten Betriebszustand hat.

23. Verfahren zum Betrieb eines Kegelreibringgetriebes mit wenigstens einem Eingangskegel (101) und wenigstens einem Ausgangskegel (102), die mittels einer Anpresseinrichtung (108; 125, 126) gegeneinander gepresst werden, ***dadurch gekennzeichnet, dass*** die Anpresseinrichtung (108; 125, 126) mit einer Betriebszustand-Anpresskraft-Kennlinie betrieben wird, die zwischen einem Ruhezustand des Kegelreibgetriebes und einem ersten Betriebszustand eine andere mittlere Steigung als zwischen dem ersten Betriebszustand und einem zweiten Betriebszustand hat.

24. Verfahren bzw. Reibgetriebe nach einem der Ansprüche 1 bis 23, ***dadurch gekennzeichnet, dass*** der Betriebszustand proportional zum Ausgangs- und/oder zum Eingangsdrehmoment gewählt ist.

25. Verfahren bzw. Reibgetriebe nach einem der Ansprüche 1 bis 24, ***dadurch gekennzeichnet, dass*** der erste Betriebszustand das niedrigste unter Volllast erwartete Drehmoment ist.

26. Verfahren bzw. Reibgetriebe nach einem der Ansprüche 1 bis 25, ***dadurch gekennzeichnet, dass*** der zweite Betriebszustand das höchste unter Volllast erwartete Drehmoment ist.

27. Verfahren bzw. Reibgetriebe nach einem der Ansprüche 1 bis 26, ***gekennzeichnet durch*** wenigstens zwei Anpresseinheiten (125, 126), deren jeweilige Anpresskraft **durch** verschiedene Betriebszustandsarten, wie beispielsweise Eingangsdrehmoment, Ausgangsdrehmoment, Gesamtlast, Kräfte oder ähnliches, variiert wird.

28. Verfahren bzw. Reibgetriebe nach einem der Ansprüche 1 bis 27, ***dadurch gekennzeichnet, dass*** die Anpresseinrichtung (108; 125, 126) eine Drehmoment-Anpresskraft-Kennlinie aufweist, die bei einem verschwindendem Drehmoment eine Anpresskraft in der Nähe von 0 N, insbesondere unter 1 N, bedingt.

29. Verfahren bzw. Reibgetriebe nach einem der Ansprüche 1 bis 28, ***dadurch gekennzeichnet, dass*** die Anpresseinrichtung (108; 125, 126) eine Drehmoment-Anpresskraft-Kennlinie aufweist, die bei Volllast zwischen einem niedrigsten, im Betrieb erwarteten Drehmoment und einem höchsten, im Betrieb erwarteten Drehmoment eine geringere mittlere Steigung aufweist als unterhalb des niedrigsten, im Betrieb erwarteten Drehmoments.

30. Verfahren bzw. Reibgetriebe nach einem der Ansprüche 1 bis 29, ***dadurch gekennzeichnet, dass*** die Anpresseinrichtung (125, 126) eine lastabhängige Betriebzustand-Anpresskraft-Kennlinie aufweist.

31. Verfahren bzw. Reibgetriebe nach Anspruch 30, ***dadurch gekennzeichnet, dass*** die Anpresskraft bei Lasten unterhalb der Volllast niedriger als die Anpresskraft unter Volllast ist.

## Claims

1. A bevel friction ring gearbox with an input bevel gear, an output bevel gear and a friction ring surrounding the bevel gear as gearbox elements (1, 2, 3) which roll on one another and transmit a torque, and with a pressing apparatus for tensioning the gearbox elements (1, 2, 3) with means for detecting a relevant characteristic variable, such as in particular the torque being transmitted, and with means for applying a pressing force corresponding to the characteristic variable detected, **characterised in that** the pressing apparatus comprises at least two part pressing apparatuses (9, 10, 11; 14), of which the first of the two part pressing apparatuses has a shorter reaction time than the second of the two part pressing apparatuses.

2. The bevel friction ring gearbox according to Claim 1, **characterised in that** the first part pressing apparatus (9, 10, 11) is uncontrolled.

3. The bevel friction ring gearbox according to Claim 1 or 2, **characterised in that** the second part pressing apparatus (14) is controlled.

4. A bevel friction ring gearbox with an input bevel gear, an output bevel gear and a friction ring surrounding the bevel gear as gearbox elements (1, 2, 3) which roll on one another and transmit a torque, and with a pressing apparatus for tensioning the gearbox elements (1, 2, 3) with means for detecting a relevant characteristic variable, such as in particular the torque being transmitted, and with means for applying a pressing force corresponding to the characteristic variable detected, **characterised in that** the pressing apparatus comprises at least two part pressing apparatuses (9, 10, 11; 14) and the first part pressing apparatus (9, 10, 11) provides a pressing force which is larger than or equal to the pressing force to be provided by the pressing apparatus, and the second part pressing apparatus (14) reduces the pressing force provided by the first part pressing apparatus (9, 10, 11).

5. The bevel friction ring gearbox according to one of Claims 1 to 4, **characterised in that** the second part pressing apparatus (14) applies a force counter to the force applied by the first part pressing apparatus (9, 10, 11).

6. The bevel friction ring gearbox according to one of Claims 1 to 5, **characterised in that** the second part pressing apparatus (14) partly compensates the force applied by the first part pressing apparatus (9, 10, 11).

7. The gearbox according to one of Claims 1 to 6, **characterised in that** the second part pressing apparatus (14) is hydraulically controlled.

8. The gearbox according to Claim 7, **characterised in that** the hydraulic control comprises an electromagnetically controlled piston (48).

9. The gearbox according to Claim 8, **characterised in that** the piston initially closes an overflow refill opening (52) on its pressure-generating travel.

10. The gearbox according to Claim 7, **characterised in that** the hydraulic control comprises a gear pump (61).

11. The gearbox according to Claim 10, **characterised in that** the gear pump is controlled by an electric motor (62) which applies a voltage-dependent torque.

12. The gearbox according to one of Claims 1 to 11, with at least two operating states, in which at least one input element (101) and at least one output element (102) are pressed against one another by means of at least one pressing apparatus with a pressing force varying as a function of the respective operating state, **characterised in that** the pressing apparatus (108; 125, 126) comprises at least two pressing apparatuses (110, 111; 125, 126).

13. The gearbox according to one of Claims 1 to 12, **characterised in that** the two pressing units (110, 111; 125, 126) have different operating state pressing force characteristics.

14. The gearbox according to one of Claims 1 to 13, **characterised in that** the two pressing units (110, 111; 125, 126) contribute a first contribution to the pressing force in the first operating state in each case and contribute a second contribution to the pressing force in the second operating state in each case, wherein the difference between the first and second contributions of the first pressing apparatus differs from the difference between the first and second contributions of the second pressing apparatus.

15. The gearbox according to one of Claims 1 to 14, **characterised in that** the two pressing units are constructed such that they act in parallel with respect to the operating state determination and/or with respect to the pressing force.

16. The gearbox according to one of Claims 1 to 15, **characterised in that** the two pressing units (110, 111; 125, 126) are constructed such that they act in series with respect to the operating state determination and/or with respect to the pressing force.

17. The gearbox according to one of Claims 1 to 16, **characterised in that** at least one pressing unit (110, 111; 125, 126) has an operating state pressing force characteristic with an essentially constant gradient.

18. The gearbox according to one of Claims 1 to 17, **characterised in that** the pressing apparatus (108; 125, 126) comprises at least two mutually coupled pressing units (110, 111; 125, 126).

19. The gearbox according to Claim 18, **characterised in that** the coupling is constructed mechanically.

20. The gearbox according to Claim 18 or 19, **characterised in that** the coupling is constructed hydrodynamically or hydrostatically.

21. The gearbox according to one of Claims 1 to 20, **characterised in that** one pressing unit (126) is arranged on the input side and one pressing unit (125) is arranged on the output side.

22. The gearbox according to one of Claims 1 to 21, with at least two operating states, in which at least one input element (101) and at least one output element (102) are pressed against one another by means of at least one pressing apparatus (108; 125, 126) with a pressing force varying as a function of the respective operating state, **characterised in that** the pressing apparatus has an operating state pressing force characteristic which has a different average gradient between a resting state of the friction gearbox and a first operating state than between the first operating state and a second operating state.

23. A method for operating a bevel friction ring gearbox with at least one input bevel gear (101) and at least one output bevel gear (102), which are pressed against one another by means of a pressing apparatus (108; 125, 126), **characterised in that** the pressing apparatus (108; 125, 126) is operated with an operating state pressing force characteristic which has a different average gradient between a rest state of the bevel friction ring gearbox and a first operating state than between the first operating state and a second operating state.

24. The method or friction gearbox according to one of Claims 1 to 23, **characterised in that** the operating state is chosen proportionally to the output and/or to the input torque.

25. The method or friction gearbox according to one of Claims 1 to 24, **characterised in that** the first operating state is the lowest torque expected under full load.

26. The method or friction gearbox according to one of Claims 1 to 25, **characterised in that** the second operating state is the highest torque expected under full load.

27. The method or friction gearbox according to one of Claims 1 to 26, **characterised by** at least two pressing units (125, 126), the respective pressing force of which is varied by various types of operating state, such as for example input torque, output torque, overall load, forces or the like.

28. The method or friction gearbox according to one of Claims 1 to 27, **characterised in that** the pressing apparatus (108; 125, 126) has a torque pressing force characteristic, which in the case of a vanishing torque requires a pressing force in the region of 0 N, particularly below 1 N.

29. The method or friction gearbox according to one of Claims 1 to 28, **characterised in that** the pressing apparatus (108; 125, 126) has a torque pressing force characteristic, which in the case of full load has a lower average gradient between a lowest torque expected during operation and a highest torque expected during operation than below the lowest torque expected during operation.

30. The method or friction gearbox according to one of Claims 1 to 29, **characterised in that** the pressing apparatus (125, 126) has a load-dependent operating state pressing force characteristic.

31. The method or friction gearbox according to Claim 30, **characterised in that** the pressing force is lower at loads below the full load than the pressing force under full load.

## Revendications

1. Transmission à cône et bague de friction comportant un cône d'entrée, un cône de sortie et une bague de friction venant en prise autour du cône comme éléments de transmission (1, 2, 3) roulant les uns sur les autres, transmettant un couple de rotation et comportant un dispositif de pressage pour contraindre les éléments de transmission (1, 2, 3) avec des moyens de détection d'une grandeur caractéristique significative, comme notamment le couple de rotation à transmettre, et avec des moyens pour appliquer une force de pressage correspondant à la grandeur caractéristique détectée, **caractérisée en ce que** le dispositif de pressage comprend au moins deux dispositifs de pressage partiel (9, 10, 11 ; 14), desquels le premier des deux dispositifs de pressage partiel présente un temps de réaction plus court que le deuxième des deux dispositifs de pressage partiel.

2. Transmission à cône et bague de friction selon la revendication 1, **caractérisée en ce que** le premier dispositif de pressage partiel (9, 10, 11) n'est pas réglé.

3. Transmission à cône et bague de friction selon les revendications 1 ou 2, **caractérisée en ce que** le deuxième dispositif de pressage partiel (14) est réglé.

4. Transmission à cône et bague de friction comportant un cône d'entrée, un cône de sortie et une bague de friction venant en prise autour du cône comme éléments de transmission (1, 2, 3) roulant les uns sur les autres, transmettant un couple de rotation et comportant un dispositif de pressage pour contraindre les éléments de transmission (1, 2, 3) avec des moyens de détection d'une grandeur caractéristique significative, comme notamment le couple de rotation à transmettre, et avec des moyens pour appliquer une force de pressage correspondant à la grandeur caractéristique détectée, **caractérisée en ce que** le dispositif de pressage comprend au moins deux dispositifs de pressage partiel (9, 10, 11 ; 14) et le premier dispositif de pressage partiel (9, 10, 11) fournit une force de pressage, qui est supérieure ou égale à la force de pressage à fournir par le dispositif de pressage, et le deuxième dispositif de pressage partiel (14) réduit la force de pressage fournie par le premier dispositif de pressage partiel (9, 10, 11).

5. Transmission à cône et bague de friction selon une des revendications 1 à 4, **caractérisée en ce que** le deuxième dispositif de pressage partiel (14) applique une force opposée à la force appliquée par le premier dispositif de pressage partiel (9, 10, 11).

6. Transmission à cône et bague de friction selon une des revendications 1 à 5, **caractérisée en ce que** le deuxième dispositif de pressage partiel (14) compense partiellement la force appliquée par le premier dispositif de pressage partiel (9, 10, 11).

7. Transmission selon une des revendications 1 à 6, **caractérisée en ce que** le deuxième dispositif de pressage partiel (14) est piloté hydrauliquement.

8. Transmission selon la revendication 7, **caractérisée en ce que** la commande hydraulique comprend un piston (48) piloté électromagnétiquement.

9. Transmission selon la revendication 8, **caractérisée en ce que** le piston obture sur son trajet générateur de pression en premier lieu une ouverture de trop-plein/remplissage (52).

10. Transmission selon la revendication 7, **caractérisée en ce que** la commande hydraulique comprend une pompe à engrenages (61).

11. Transmission selon la revendication 10, **caractérisée en ce que** la pompe à engrenages est pilotée par un moteur électrique (62), qui applique un couple de rotation fonction de la tension.

12. Transmission selon une des revendications 1 à 11, comportant au moins deux états opérationnels, dans lesquels au moins un élément d'entrée (101) et au moins un élément de sortie (102) sont pressés l'un contre l'autre au moyen d'au moins un dispositif de pressage avec une force de pressage variable en fonction de l'état opérationnel respectif, **caractérisée en ce que** le dispositif de pressage (108 ; 125, 126) comprend au moins deux dispositifs de pressage (110, 111 ; 125, 126).

13. Transmission selon une des revendications 1 à 12, **caractérisée en ce que** les deux unités de pressage (110, 111 ; 125, 126) présentent des courbes caractéristiques force de pressage - état opérationnel différentes.

14. Transmission selon une des revendications 1 à 13, **caractérisée en ce que** les deux unités de pressage (110, 111 ; 125, 126) produisent dans le premier état opérationnel respectivement un premier apport à la force de pressage et dans le deuxième état opérationnel respectivement un deuxième apport à la force de pressage, dans laquelle la différence entre le premier et le deuxième apport du premier dispositif de pressage s'écarte de la différence entre le premier et le deuxième apport du deuxième dispositif de pressage.

15. Transmission selon une des revendications 1 à 14, **caractérisée en ce que** les deux unités de pressage sont conçues de manière à agir en parallèle en ce qui concerne la détermination d'état opérationnel et/ou la force de pressage.

16. Transmission selon une des revendications 1 à 15, **caractérisée en ce que** les deux unités de pressage (110, 111 ; 125, 126) sont conçues de manière à agir en série en ce qui concerne la détermination d'état opérationnel et/ou la force de pressage.

17. Transmission selon une des revendications 1 à 16, **caractérisée en ce que** au moins une unité de pressage (110, 111 ; 125, 126) présente une courbe caractéristique état opérationnel - force de pressage avec une élévation essentiellement constante.

18. Transmission selon une des revendications 1 à 17, **caractérisée en ce que** le dispositif de pressage (108 ; 125, 126) comprend au moins deux unités de pressage (110, 111 ; 125, 126) couplées l'une à l'autre.

19. Transmission selon la revendication 18, **caractérisée en ce que** l'accouplement est conçu mécaniquement.

20. Transmission selon les revendications 18 ou 19, **caractérisée en ce que** l'accouplement est conçu hydrodynamiquement ou hydrostatiquement.

21. Transmission selon une des revendications 1 à 20, **caractérisée en ce que** une unité de pressage (126) est disposée du côté d'entrée et une unité de pressage (125) est disposée du côté de sortie.

22. Transmission selon une des revendications 1 à 21 comportant au moins deux états opérationnels, dans lesquels au moins un élément d'entrée (101) et au moins un élément de sortie (102) sont pressés l'un contre l'autre au moyen d'au moins un dispositif de pressage (108 ; 125, 126) avec une force de pressage variable en fonction de l'état opérationnel respectif, **caractérisée en ce que** le dispositif de pressage présente une courbe caractéristique état opérationnel - force de pressage, qui entre un état de repos de la transmission par friction et un premier état opérationnel a une autre élévation moyenne qu'entre le premier état opérationnel et un deuxième état opérationnel.

23. Procédé d'exploitation d'une transmission à cône et bague de friction comportant au moins un cône d'entrée (101) et au moins un cône de sortie (102), qui sont pressés l'un contre l'autre au moyen d'un dispositif de pressage (108 ; 125, 126), **caractérisé en ce que** le dispositif de pressage (108 ; 125, 126) est exploité avec une courbe caractéristique état opérationnel _ force de pressage, qui entre un état de repos de la transmission à cône et bague de friction et un premier état opérationnel a une autre élévation moyenne qu'entre le premier état opérationnel et un deuxième état opérationnel.

24. Procédé, respectivement transmission par friction selon une des revendications 1 à 23, **caractérisé en ce que** l'état opérationnel est sélectionné proportionnellement au couple de rotation de sortie et/ou d'entrée.

25. Procédé, respectivement transmission par friction selon une des revendications 1 à 24, **caractérisée en ce que** le premier état opérationnel est un couple de rotation le plus bas escompté sous charge complète.

26. Procédé, respectivement transmission par friction selon une des revendications 1 à 25, **caractérisée en ce que** le premier état opérationnel est un couple de rotation le plus haut escompté sous charge complète.

27. Procédé, respectivement transmission par friction selon une des revendications 1 à 26, **caractérisé par** au moins deux unités de pressage (125, 126), dont la force de pressage respective est variée par différents types d'états opérationnels, comme par exemple le couple de rotation d'entrée, le couple de rotation de sortie, la charge totale, les forces ou similaire.

28. Procédé, respectivement transmission par friction selon une des revendications 1 à 27, **caractérisé en ce que** le dispositif de pressage (108 ; 125, 126) présente une courbe caractéristique couple de rotation - force de pressage, qui détermine, en présence d'un couple de rotation flottant une force de pressage proche de 0 N, notamment inférieure à 1 N.

29. Procédé, respectivement transmission par friction selon une des revendications 1 à 28, **caractérisé en ce que** le dispositif de pressage (108 ; 125, 126) présente une courbe caractéristique couple de rotation - force de pressage, qui en présence d'une charge complète entre un couple de rotation le plus bas, escompté en fonctionnement et un couple de rotation le plus haut, escompté en fonctionnement présente une élévation moyenne moindre, au-dessous du couple de rotation le plus bas, escompté en fonctionnement.

30. Procédé, respectivement transmission par friction selon une des revendications 1 à 29, **caractérisé en ce que** le dispositif de pressage (125, 126) présente une courbe caractéristique état opérationnel - force de pressage fonction de la charge.

31. Procédé, respectivement transmission par friction selon la revendication 30, **caractérisé en ce que** la force de pressage en présence d'une charge au-dessous de la charge complète est plus petite que la force de pressage sous charge complète.
